# EUROPEAN PATENT APPLICATION

(11) **EP 2 908 564 A1**
(43) Date of publication of application: **19.08.2015**
(21) Application number: 13846607.3
(22) Date of filing: 26.08.2013
(51) Int. Cl.: H04W 4/20

(54) **DATA TRANSMITTING AND RECEIVING METHOD, DEVICE, AND DATA TRANSCEIVING SYSTEM**

(30) Priority: 15.10.2012 CN 201210390356
(71) Applicant: ZTE Corporation, Shenzhen, Guangdong 518057 (CN)
(72) Inventor: CUI, Yunpeng, Shenzhen Guangdong 518057 (CN); DAI, Qian, Shenzhen Guangdong 518057 (CN); MAO, Lei, Shenzhen Guangdong 518057 (CN); XU, Yingqi, Shenzhen Guangdong 518057 (CN)
(74) Representative: Mozzi, Matteo
(86) International application number: PCT/CN2013/082317
(87) International publication number: WO 2014/059825

(57) **Abstract**

A data transmitting and receiving method, device, and data transceiving system are provided, wherein the data transmitting method includeds: a UE bears the to-be-transmitted data in batches and transmits in an RRC signaling. The present invention solves the problem of low system efficiency and unable to transmit all the data with respect to many services of the UE due to the smaller data volume transmission capability, and can transmit larger data, thus the signaling overhead generated by data transmission is further reduced, and the system efficiency is improved.

## Description

### Technical Field

The present document relates to the communication field, and in particular relates to a method for transmitting and receiving data, a use equipment (UE), an access network device, a core network device and a data transceiving system.

### Background

The machine-to-machine (M2M) communication is also called as machine type communication (MTC). In recent years, the machine type communication is taken as a new communication concept, and the services among the MTCs are also widespread concerned and widely applied, such as smart home and logistics monitoring. At the same time, with the improvement of people's living standard, smart terminals generated according to personalized requirements also show strong momentum, such as smart phones and tablet computers. With the rapid development of a wireless communication technology, the service types operating on the smart terminal increase as well, such as online games and streaming videos. In many application scenarios of the machine type communication and the smart terminal, the data volume transmitted by an MTC device or the smart terminal is not very large (typically a few dozen bytes to a few hundred bytes), and data can be transmitted once by only occupying fewer physical resources.

In the current standard specification of the LTE, in order to transmit these pieces of data, a UE needs to transmit the data according to the prior art, that is, after a data radio bearer (DRB) and an S1 (the S1 message is a message supported by a logical interface between an evolved global land wireless access network node B and mobility management entity (MME) which is well-known to a person skilled in the art) bearer are established according to the signalling flow, the data can be transmitted to a network side through the DRB and the S1 bearer. When data transmission is performed through the prior art, compared to the amount of data transmission, the generated signalling overhead is very large, which seriously reduces the system efficiency. In a standard research process at the current stage, some companies put forward the solution of using control plane signalling to transmit data; and the existing control plane signalling can be divided into two kinds: one is adding data in an NAS message to realize transmitting data through the control plane signalling, wherein the used non-access stratum (NAS) message can be a tracking area update (TAU) message, an attachment message, a service request message, etc.; and the other is using short message service (SMS) to transmit data. The method for using the NAS message to transmit data is directed to the case of a single small packet, although this method can realize the transmission of the data, since the data volume that can be carried by the control plane signalling is affected by factors such as resource allocation and the size of the control plane signalling, this solution is only applied to very small packet (a few bytes to a few dozen bytes); and the method for using the SMS to transmit data is directed to the case of a small data volume, and the data transmission amount thereof is about 100 bytes. With respect to many services of the UE (the size of the packet is between a few dozen bytes and a few hundred bytes), the two solutions cannot realize the transmission of all the data, and if using the prior art of establishing a user plane, the problem of relatively low system efficiency stilled exists.

### Summary

Provided are a method for transmitting and receiving data, a UE, an access network device, a core network device and a data transceiving system, so as to at least solve the problem of low system efficiency and unable to transmit all the data with respect to many services of the UE due to the smaller data volume transmission capability in the related art.

According to one aspect of the present invention, a method for transmitting data is provided, and the mthod includes: a UE bears the to-be-transmitted data in radio resource control (RRC) signalling in batches and transmits the to-be-transmitted data.

Preferably, the UE bears the to-be-transmitted data in the RRC signalling in batches and transmits the to-be-transmitted data includes: in the case where the data volume of the to-be-transmitted data exceeds a pre-set data volume or the number of packets of the to-be-transmitted data is multiple, the UE bears the to-be-transmitted data in an NAS protocol data unit (PDU) of the RRC signalling in batches and transmits same.

Preferably, the method further includes: the UE transmits user equipment data transmission control information to an access network device or a core network device via the RRC signalling, wherein the user equipment data transmission control information is used to indicate a current transmission situation of the to-be-transmitted data.

Preferably, the user equipment data transmission control information transmitted from the UE to the access network device includes at least one of the following: data indication information, which is used for indicating a status where the data is transmitted via the RRC signalling currently; data transmission completion indication information, which is used for indicating that data transmission has been completed; packet control information, which is used for indicating the transmission situation of packets of the to-be-transmitted data; and a buffer status report (BSR), which is used for indicating the transmission situation of subsequent data.

Preferably, the method for the UE adding the data indication information includes: adding a new information element (IE) in the RRC signalling, and adding the data indication information to the new IE; using a control element (CE) of new media access control (MAC) to bear the data indication information; or using reserved bits in an MAC sub-frame header to bear the data indication information.

Preferably, the method for the UE adding the data transmission completion indication information includes: a new information element (IE) has been added in the RRC signalling, and the data transmission completion indication information has been added to the new IE; using a control element (CE) of new media access control (MAC) to bear the data transmission completion indication information; or using reserved bits in an MAC sub-frame header to bear the data transmission completion indication information.

Preferably, the user equipment data transmission control information transmitted from the UE to the core network device includes at least one of the following: data indication information, which is used for indicating a status where the data is transmitted via the RRC signalling currently; data transmission completion indication information, which is used for indicating that data transmission has been completed; and packet control information, which is used for indicating the transmission situation of packets of the to-be-transmitted data.

Preferably, the UE transmits the data transmission control information to the core network device includes: the UE adds the data transmission control information to the NAS PDU of the RRC signalling and transmits same to the core network device.

Preferably, the packet control information includes at least one of the following: the data volume of which the transmission is not completed, the number of packets of which the transmission is not completed, the number of to-be-transmitted packets, and the times of completing the transmission of a single packet of the to-be-transmitted data.

Preferably, the RRC signalling includes at least one of the following: an RRC connection establishment completion message, an uplink information transmission message, and a new defined RRC message.

Preferably, after the UE bears the to-be-transmitted data in the radio resource control (RRC) signalling in batches and transmits the to-be-transmitted data to the core network device, the method further includes: the UE establishes a complete RRC connection or releasing the RRC connection according to the message fed back from the core network device or the access network device.

According to another aspect of the present invention, a method for transmitting data is provided, the method includes: receiving the to-be-transmitted data from the UE, wherein the to-be-transmitted data is data which is born by the UE in the RRC signalling in batches and transmitted thereby; and transmitting the data received every time.

Preferably, receiving the to-be-transmitted data from the UE includes: receiving the user equipment data transmission control information transmitted by the UE, wherein the user equipment data transmission control information is used to indicate a current transmission situation of the to-be-transmitted data.

Preferably, the user equipment data transmission control information includes at least one of the following: data indication information, which is used for indicating a status where the data is transmitted via the RRC signalling currently; data transmission completion indication information, used for indicating that data transmission has been completed; packet control information, which is used for indicating the transmission situation of packets of the to-be-transmitted data; and a BSR, which is used for indicating the transmission situation of subsequent data.

Preferably, transmitting the received data indication information transmitted by the UE includes: the access network device transmits the received data indication information which is transmitted by the UE to the core network device, wherein the data indication information is carried in an S1 message, and the S1 message includes one of the following: an initial user equipment message, an uplink non-access stratum transmission message, and a new defined S 1 message.

Preferably, after transmitting the data received every time, the method further includes: the access network device judging whether all the to-be-transmitted data which is transmitted by the UE has been received; if so, the access network device transmits the data transmission completion indication information to the core network device, wherein the data transmission completion indication information is carried in the S 1 message.

Preferably, the access network device judging whether all the to-be-transmitted data which is transmitted by the UE has been received includes: the access network device judging whether there is subsequent data to be transmitted according to the indication of the BSR; the access network device judging whether the transmission of the packets has been completed according to the packet control information; or the access network device judging whether the transmission of the data has been completed according to the data transmission completion indication information.

According to another aspect of the present invention, a method for receiving data is provided, includes: receiving the to-be-transmitted data from the UE and/or the access network device, wherein the to-be-transmitted data is data which is born in the RRC signalling in batches and transmitted.

Preferably, after receiving the to-be-transmitted data from the UE and/or the access network device, the method further includes: caching the received data; determining a current transmission situation of the to-be-transmitted data according to the received user equipment data transmission control information, wherein the user equipment data transmission control information is used to indicate the current transmission situation of the to-be-transmitted data.

Preferably, the user equipment data transmission control information includes at least one of the following: data indication information, used for indicating a status where the data is transmitted via the RRC signalling currently; data transmission completion indication information, used for indicating that data transmission has been completed; packet control information, used for indicating the transmission situation of packets of the to-be-transmitted data; and a BSR, used for indicating the transmission situation of subsequent data.

Preferably, determining a current transmission situation of the to-be-transmitted data according to the received user equipment data transmission control information includes: the core network device judging whether all the to-be-transmitted data has been received and whether to transmit the received data to subsequent core network nodes according to the data transmission completion indication information; and the core network device starting a data transmission control timer according to the data indication information transmitted by the access network device or the data indication information added by the UE in the NAS PDU, wherein the data transmission control timer is used to control the transmission of the data.

Preferably, the core network device judging whether to transmit the received data to the subsequent core network nodes includes: the core network device judging whether the UE allows to bear the to-be-transmitted data in the RRC signalling in batches and transmit same according the subscription information of the UE; or the core network device judging whether the receiving of the data has been completed.

Preferably, after the core network device determining a current transmission situation of the to-be-transmitted data according to the received user equipment data transmission control information, the method further includes: the core network device judging whether to continue to complete the subsequent RRC connection process or release the RRC connection.

Preferably, the core network device judging whether to continue to complete the subsequent RRC connection process or release the RRC connection includes: the core network device performing judgement according to the subscription information of the UE; the core network device performing judgement according to whether there is downlink data required to be transmitted during a period of time after transmitting the data to the subsequent core network nodes; and the core network device performing judgement according to an agreed rule with the UE.

Preferably, after the core network device judging whether to continue to complete the subsequent RRC connection process or release the RRC connection, the method further includes: if the core network device determining not to transmit the data to the subsequent core network nodes, the core network device discarding the received data and indicating the access network device to release the RRC connection, or the core network device discarding the received data and performing a subsequent RRC connection process.

Preferably, the method further includes: in the case where the data transmission control timer expires, the core network device transmits data to the subsequent core network nodes, and completing the subsequent process of connection establishment; and the core network device indicating the access network device to release the RRC connection and indicating the reason for releasing the RRC connection thereto.

According to yet another aspect of the present invention, a UE is provided, includes: a first transmission module, which is configured to bear the to-be-transmitted data in the RRC signalling in batches and transmit same.

Preferably, the first transmission module includes: a transmission unit, which is configured to bear the to-be-transmitted data in the NAS PDU of the RRC signalling in batches and transmit same in the case where the data volume of the to-be-transmitted data exceeds a pre-set data volume or the number of packets of the to-be-transmitted data is multiple.

Preferably, the UE further includes: a second transmission module, which is configured to transmit user equipment data transmission control information to an access network device or a core network device via the RRC signalling, wherein the user equipment data transmission control information is used to indicate a current transmission situation of the to-be-transmitted data.

According to yet another aspect of the present invention, an access network device is provided, includes: a first receiving module, which is configured to receive the to-be-transmitted data from the UE, wherein the to-be-transmitted data is data which is born by the UE in the RRC signalling in batches and transmitted thereby; and a third transmission module, which is configured to transmit the data received every time.

Preferably, the first receiving module includes: a receiving unit, which is configured to receive the user equipment data transmission control information transmitted by the UE, wherein the user equipment data transmission control information is used to indicate a current transmission situation of the to-be-transmitted data.

According to yet another aspect of the present invention, a core network device is provided, includes: a second receiving module, which is configured to receive the to-be-transmitted data from the UE and/or the access network device, wherein the to-be-transmitted data is data which is born in the RRC signalling in batches and transmitted.

Preferably, the core network device further includes: a cache module, which is configured to cache the received data; a determination module, which is configured to determine a current transmission situation of the to-be-transmitted data according to the received user equipment data transmission control information, wherein the user equipment data transmission control information is used to indicate the current transmission situation of the to-be-transmitted data.

According to still another aspect of the present invention, a data transceiving system is provided, includes: any one of the above-mentioned UEs, the above-mentioned access network device and any one of the above-mentioned core network devices.

In the present, the to-be-transmitted data is born in the RRC signalling in batches and transmitted. The present invention solves the problem of low system efficiency and unable to transmit all the data with respect to many services of the UE due to the smaller data volume transmission capability, and can transmit larger data, thus further reducing the signalling overhead generated by data transmission, and improving system efficiency.

### Description of the Drawings

Drawings, provided for further understanding of the present invention and forming a part of the specification, are used to explain the present invention together with embodiments of the present invention rather than to limit the present invention. In the accompanying drawings:
Fig. 1 is a flow diagram of a method for transmitting data according to an embodiment of the present invention;
Fig. 2 is a flowchart of a method for transmitting data according to an embodiment of the present invention;
Fig. 3 is a flow diagram of a method for receiving data according to an embodiment of the present invention;
Fig. 4 is a flowchart of a method for transmitting data according to preferred embodiment II of the present invention;
Fig. 5 is a flowchart of a method for transmitting data according to preferred embodiment III of the present invention;
Fig. 6 is a flowchart of a method for transmitting data according to preferred embodiment IV of the present invention;
Fig. 7 is a flowchart of a method for transmitting data according to preferred embodiment V of the present invention;
Fig. 8 is a flowchart of a method for transmitting data according to preferred embodiment VI of the present invention;
Fig. 9 is a flowchart of a method for transmitting data according to preferred embodiment VII of the present invention;
Fig. 10 is a flowchart of a method for transmitting data according to preferred embodiment VIII of the present invention;
Fig. 11 is a flowchart of a method for transmitting data according to preferred embodiment IX of the present invention;
Fig. 12 is a flowchart of a method for transmitting data according to preferred embodiment X of the present invention;
Fig. 13 is a flowchart of a method for transmitting data according to preferred embodiment XI of the present invention;
Fig. 14 is a flowchart of a method for transmitting data according to preferred embodiment XII of the present invention;
Fig. 15 is a structure diagram of a data transceiving system according to an embodiment of the present invention;
Fig. 16 is a structure diagram I of a UE according to an embodiment of the present invention;
Fig. 17 is a structure diagram II of a UE according to an embodiment of the present invention;
Fig. 18 is a structure diagram I of an access device according to an embodiment of the present invention;
Fig. 19 is a structure diagram I of a core network device according to an embodiment of the present invention;
Fig. 20 is a structure diagram II of a core network device according to an embodiment of the present invention; and
Fig. 21 is a diagram of bits allocation of the first bit in an MAC sub-frame header according to an embodiment of the present invention.

### Specific Implementations

The present invention is described below with reference to the accompanying drawings and embodiments in detail. It should be noted that the embodiments of the present application and the characteristics of the embodiments can be combined with each other if no conflict is caused.

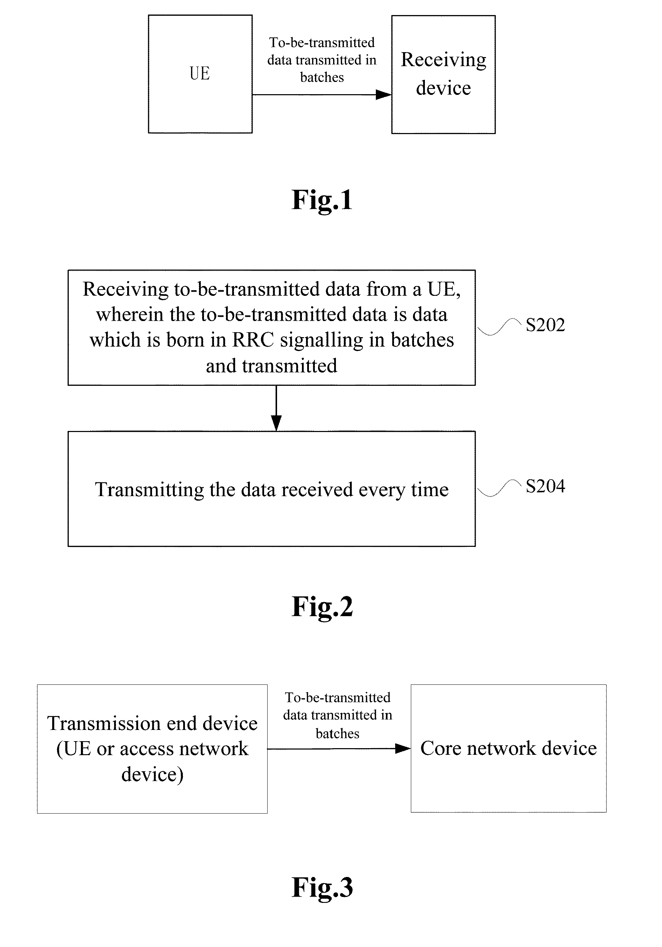

In the related art, on the basis of the problem of low system efficiency and unable to transmit all the data with respect to many services of the UE due to the smaller data volume transmission capability, this embodiment provides a method for transmitting data, and the flow diagram thereof is as shown in Fig. 1, includes: a UE bears to-be-transmitted data in RRC signalling in batches and transmits the to-be-transmitted data.

In this embodiment, the to-be-transmitted data is born in the RRC signalling in batches and transmitted. This embodiment solves the problem of low system efficiency and unable to transmit all the data with respect to many services of the UE due to the smaller data volume transmission capability, and can transmit larger data, thus further reducing the signalling overhead generated by data transmission, and improving system efficiency.

In the implementation process, the UE bears the to-be-transmitted data in the RRC signalling in batches and transmits the to-be-transmitted data may be that in the case where the data volume of the to-be-transmitted data exceeds a pre-set data volume or the number of packets of the to-be-transmitted data is multiple, the UE bears the to-be-transmitted data in an NAS PDU of the RRC signalling in batches and transmits same to the core network device. In the implementation process, the UE can judge whether the current to-be-transmitted data volume exceeds a pre-set threshold, if so, the data is transmitted in batches. The RRC signalling includes at least one of the following: an RRC connection establishment completion message, an uplink information transmission message, and a new defined RRC message (i.e. a new RRC message).

During the implementation, the UE transmits user equipment data transmission control information to an access network device or a core network device via the RRC signalling, wherein the user equipment data transmission control information is used to indicate a current transmission situation of the to-be-transmitted data. The user equipment data transmission control information transmitted from the UE to the access network device includes at least one of the following: data indication information, which is used for indicating a status where the data is transmitted via the RRC signalling currently; data transmission completion indication information, which is used for indicating that data transmission has been completed; packet control information, which is used for indicating the transmission situation of packets of the to-be-transmitted data; and a BSR, used for indicating the transmission situation of subsequent data.

The method for the UE to add the data indication information includes any one of the following: (1) adding a new IE to the RRC signalling so as to add the data indication information to the new IE; (2) using a new MAC CE to bear the data indication information; and (3) using the reserved bits in the MAC sub-frame header to bear the data indication information.

The method for the UE to add the data transmission completion indication information includes any one of the following: (1) adding a new IE to the RRC signalling so as to add the data transmission completion indication information to the new IE; (2) using a new MAC CE to bear the data transmission completion indication information; and (3) using the reserved bits in the MAC sub-frame header to bear the data transmission completion indication information.

The user equipment data transmission control information transmitted from the UE to the core network device includes at least one of the following: (1) data indication information, used for indicating a status where the data is transmitted via the RRC signalling currently; (2) data transmission completion indication information, used for indicating that data transmission has been completed; and (3) packet control information, used for indicating the transmission situation of packets of the to-be-transmitted data.

In the process of the UE transmits the data transmission control information to the core network device, the UE adds the data transmission control information to the NAS PDU of the RRC signalling and transmits same to the core network device.

The packet control information includes at least one of the following: the data volume of which the transmission is not completed, the number of packets of which the transmission is not completed, the number of to-be-transmitted packets, and the times of completing the transmission of a single packet of the to-be-transmitted data. The times of completing the transmission of a single packet of the to-be-transmitted data is the total times of transmitting one packet, for example, there are three packets, and the packet 1 is transmitted now, and the packet 1 completes the transmission thereof for two times, at the moment, the times of completing the transmission of a single packet of the to-be-transmitted data is two.

After the UE bears the to-be-transmitted data in the RRC signalling in batches and transmits same to the core network device, the UE establishes a complete RRC connection or releases the RRC connection according to the message fed back from the core network device or the access network device.

The embodiments of the present invention further provide a method for transmitting data, and the flowchart of the method is as shown in Fig. 2, includes steps S202-S204.

Step S202, to-be-transmitted data from a UE is received, wherein the to-be-transmitted data is data which is born in RRC signalling in batches and transmitted; and
step S204, data received every time is transmitted.

The process of receiving the to-be-transmitted data from the UE may comprise: an access network device receiving the user equipment data transmission control information transmitted by the UE, wherein the user equipment data transmission control information is used to indicate a current transmission situation of the to-be-transmitted data.

The process of the access device transmits the received data indication information transmitted by the UE to the core network device includes: the access network device transmits the received data indication information which is transmitted by the UE to the core network device, wherein the data indication information is carried in an S1 message, and the S1 message includes one of the following: an initial user equipment message, an uplink non-access stratum transmission message, and a new defined S1 message. At the moment, the new defined S 1 message may be different from the previous S 1 message.

After transmitting the data received every time to the core network device, the access network device judges whether all the to-be-transmitted data which is transmitted by the UE has been received; if so, the access network device transmits the data transmission completion indication information to the core network device, wherein the data transmission completion indication information is carried in the S 1 message.

The access network device can judge whether all the to-be-transmitted data which is transmitted by the UE has been received through the following methods: the access network device judging whether there is subsequent data to be transmitted according to the indication of the BSR; or the access network device judging whether the transmission of the packets has been completed according to the packet control information; or the access network device judging whether the transmission of the data has been completed according to the data transmission completion indication information.

The embodiments of the present invention further provide a method for receiving data, and the flowchart thereof is as shown in Fig. 3, includes: receiving the to-be-transmitted data from receiving devices such as the UE and/or the access network device, wherein the to-be-transmitted data is data which is born in the RRC signalling in batches and transmitted.

After receiving the to-be-transmitted data from the UE or the access network device, the core network device caches the received data; the core network device determines a current transmission situation of the to-be-transmitted data according to the received user equipment data transmission control information, wherein the user equipment data transmission control information is used to indicate the current transmission situation of the to-be-transmitted data.

The core network device determining a current transmission situation of the to-be-transmitted data according to the received user equipment data transmission control information includes: the core network device judging whether all the to-be-transmitted data has been received and whether to transmit the received data to subsequent core network nodes according to the data transmission completion indication information; and the core network device starting a data transmission control timer according to the data indication information transmitted by the access network device or the data indication information added by the UE in the NAS PDU, wherein the data transmission control timer is used to control the transmission of the data.

In the implementation process, the core network device judges whether the subscription information of the UE is allowed to perform data transmission by using the data transmission optimization scheme according to the subscription information of the UE so as to bear the to-be-transmitted data is the RRC signalling in batches and transmit same; or the core network device judges whether the receiving of the data has been completed.

After the core network device determining the current transmission situation of the to-be-transmitted data according to the received user equipment data transmission control information, the core network device judges whether to continue to complete the subsequent RRC connection process or release the RRC connection.

The core network device judges whether to continue to complete the subsequent RRC connection process or release the RRC connection through the following methods: the core network device performing judgement according to the subscription information of the UE; the core network device performing judgement according to whether there is downlink data required to be transmitted during a period of time after transmitting the data to the subsequent core network nodes; and the core network device performing judgement according to an agreed rule with the UE.

After the core network device judging whether to continue to complete the subsequent RRC connection process or release the RRC connection, if the core network device determining not to transmit the data to the subsequent core network nodes, the core network device discards the received data and indicates the access network device to release the RRC connection, or the core network device discards the received data and performs a subsequent RRC connection process.

In the implementation process, in the case where the data transmission control timer expires, the core network device transmits data to the subsequent core network nodes, and completes the subsequent process of connection establishment; and the core network device indicates the access network device to release the RRC connection and indicates the reason for releasing the RRC connection thereto.

### Preferred embodiment I

When the transmitted data volume conforms a certain scope or the number of the packets is multiple, the preferred embodiment uses an optimized method for transmitting data through control plane signalling to realize data transmission, so as to achieve the purpose of reducing signalling overhead due to data transmission, realizing network performance optimization, and improving system efficiency.

In the preferred embodiment, the method for a UE to transmit data through a control plane includes: in the case where the to-be-transmitted data volume conforms a certain scope or the number of the packets is multiple, the UE bears the to-be-transmitted data in the NAS PDU of the RRC signalling in batches and transmits same to the core network device for cache, and transmits the user equipment data transmission control information to the access network device or the core network device while using the RRC signalling to transmit data.

The user equipment data transmission control information transmitted from the UE to the access network device includes one of the following or a combination thereof: data indication information, which is used for indicating that the data is transmitted via the RRC signalling currently; data transmission completion indication information, which is used for indicating whether data transmission has been completed; packet control information, wherein the control information is used for indicating the transmission situation of packets to the access network device; and a BSR (buffer status report), if the BSR indicates that there is no subsequent data to be transmitted, then it is represented that that data transmission has been completed; otherwise, it is represented that the data transmission is not completed.

The user equipment data transmission control information transmitted from the UE to the core network device includes one of the following or a combination thereof: data indication information, used for indicating that the data is transmitted via the RRC signalling currently; data transmission completion indication information, used for indicating whether data transmission has been completed; and packet control information, wherein the control information is used for indicating the transmission situation of packets to the access network device.

The method used by the UE to transmit the data indication information to the access network device may be one of the following: adding a new IE to the RRC signalling used for data transmission, and adding the data indication information to the new IE; using a new MAC CE to bear the data indication information; and using the reserved bits in the MAC sub-frame header to bear the data indication information.

One of the following methods may be used for the UE to transmit the data transmission completion indication information to the access network device: adding a new IE to the RRC signalling used for data transmission, and the data transmission completion indication information has been added to the new IE; using a new MAC CE to bear the data transmission completion indication information; and using the reserved bits in the MAC sub-frame header to bear the data transmission completion indication information.

The method for the UE to transmit the data transmission control information to the core network device may be adding the data transmission control information to the NAS PDU of the RRC signalling.

The packet control information may be one of the following or a combination thereof: the data volume of which the transmission is not completed, the number of packets of which the transmission is not completed, the number of to-be-transmitted packets, and the transmission times of a single packet.

The RRC signalling may be one of the following or a combination thereof: an RRC connection establishment completion message, an uplink information transmission message, and a new RRC message. The new RRC message may comprise an RRC processing identification field and an NAS data-specific information field; and may also comprise: a data transmission control information field, a non-critical expansion field, etc., wherein the data transmission control information filed may comprise a data indication information field, a data transmission completion indication information field, a packet control information field, a non-critical expansion field, etc.

After the data transmission is completed, the UE can establish a complete RRC connection or release the RRC connection according to a subsequent signalling flow received from the core network device or the access network device.

With regard to the access network device, after the data transmitted by the UE is received, the received data is transmitted to the core network device through an S1 message; after receiving the data indication information transmitted by the UE, the access network device transmits the data indication information to the core network device; and the access network device judges whether all the data transmitted by the UE has been received, and transmits data transmission completion indication information to the core network device.

The method for the access network device to judge whether the data receiving has been completed may be one of the following: performing judgement through the BSR, if the BSR indicates that there is no subsequent data to be transmitted, then it is represented that the data transmission has been completed; otherwise, the data transmission is not completed; performing judgement through the packet control information, if the number of the packets of which the transmission is not completed is equal to the pre-set value ("0"), then it is represented that the data transmission has been completed; otherwise, the data transmission is not completed; and performing judgement through the data transmission completion indication information.

The received non-access stratum information and all the data is transmitted to the core network device through the S 1 message, and the S 1 message may be one of the following: an initial user equipment message, an uplink NAS transport message, and a new S 1 message.

After receiving the data indication information transmitted by the UE, the access network device adds the data indication information to the S 1 message used for transmitting data, and transmits the data indication information to the core network device.

The access network device transmits the data transmission completion indication information to the core network device, wherein the indication information may be received from the UE, or may be generated by the access network device according to the result of judging whether the data receiving is completed; and the following method may be used to transmit the information to the core network device: the data transmission completion indication information has been added to the S 1 message for data transmission.

With regard to the core network device, after receiving the S 1 message which carries the data, the data indication information and the data transmission completion indication information and is transmitted by the access network device, the core network device caches the received data, and the core network device judges whether all the data transmitted by the UE has been received according to the data transmission completion indication information, and judges whether to transmit the received data to the subsequent core network nodes; after receiving the data indication information transmitted by the access network device or the data indication information added by the UE in the NAS PDU, the core network device starts a data transmission control timer (such as Tsmalldata); and the core network device judges whether to continue to complete the subsequent RRC connection process or release the RRC connection. The data transmission control timer is used to control the data transmission, and if the timer expires, one of the following operations may be executed: the core network device transmits data to the subsequent nodes, and completing the subsequent process of connection establishment; and the core network device indicating the access network device to release the RRC connection and indicating the reason for releasing the RRC connection thereto.

The core network device judging whether to transmit the received data to the subsequent core network nodes may be judged by using one of the following or a combination thereof: whether the subscription information of the UE is allowed to perform data transmission by using the data transmission optimization scheme; and whether the core network device completes the data receiving.

If the core network device judges not to transmit the data to the subsequent core network nodes, then the core network device discards the received data and indicates the access network device to release the RRC connection, or the core network device discards the received data and performs a subsequent RRC connection process; otherwise, the core network device transmits the received data to the subsequent core network nodes.

The core network device judging whether to continue to complete the subsequent RRC connection process or release the RRC connection may be judged according to one of the following: the core network device performing judgement according to the user equipment subscription information; whether there is downlink data required to be transmitted during a period of time after the core network device transmits the data to the subsequent nodes; and an agreed rule between the core network device and the UE.

The above-mentioned implementation of the present invention will be described with reference to the accompanying drawings and preferred embodiments hereinafter.

### Preferred embodiment II

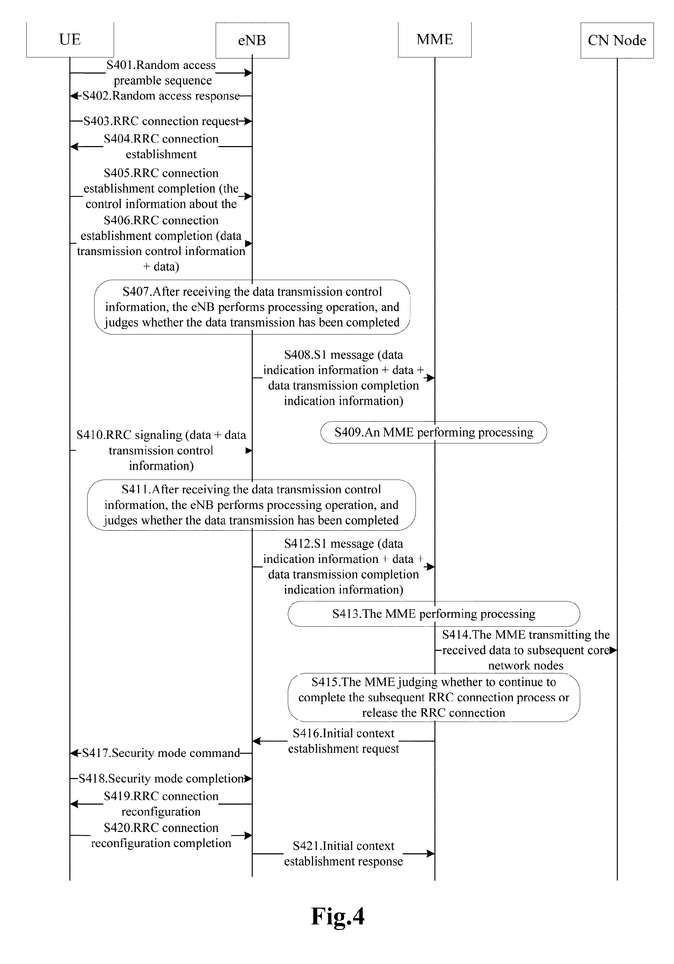

Fig. 4 is a flowchart for continuing to complete a subsequent connection establishment process after the UE transmits the data, and the specific signalling execution flow is as follows, includes steps S401-S421.

Step S401: a UE transmits a random access preamble sequence to an eNB.

When there is data required to be transmitted, the UE or an MTC device first selects a preamble sequence, and transmits the preamble sequence to the eNB according to random access resource information configured by the system.

Step S402: the eNB transmits a random access response message (Msg2) to the UE.

The random access response message may comprise a preamble sequence identification corresponding to the random access preamble sequence which is transmitted by the UE, uplink transmission timing adjustment, uplink resource allocated for the RRC connection request message, temporary cell-radio network temporary identity (C-RNTI), etc.

Step S403: the UE transmits an RRC connection request to the eNB. After receiving the Msg2, the UE transmits the RRC connection establishment request message by using the uplink resource allocated in the random access response message.

Step S404: the eNB transmits the RRC connection establishment message to the UE.

The eNB transmits the RRC connection establishment message to the UE for establishing signalling radio bearer 1 (SRB 1), and allocates the uplink resource used for the RRC connection establishment completion message for the UE.

Step S405: the UE transmits the RRC connection establishment message to the eNB, wherein the message also carries the data transmission control information.

According the SRB 1 established in the RRC connection establishment message and the allocated uplink resource, the UE decides whether to use the control plane signalling to transmit the data according to the size of the to-be-transmitted data volume or the number of the packets. If the control plane signalling is used to transmit the data, then whether to carry the data transmission control information and the data in the RRC connection establishment completion message transmitted to the eNB is determined according to the size of the allocated uplink resource or the agreed rule between the UE and the eNB; if the data is not carried in the RRC connection establishment completion message, then step S405 is executed, and step S406 is skipped to execute step S407, wherein the data transmission control information may be transmitted from the UE to the core network device or transmitted from the UE to the access network device.

Step S406: the UE transmits the RRC connection establishment completion message to the eNB, wherein the message also carries the data transmission control information and the data, and according the SRB 1 established in the RRC connection establishment completion message and the allocated uplink resource, the UE decides whether to use the control plane signalling to transmit the data according to the size of the to-be-transmitted data volume or the number of the packets; if the control plane signalling is used to transmit the data, then whether to carry the data transmission control information and the data in the RRC connection establishment completion message transmitted to the eNB is determined according to the size of the allocated uplink resource or the agreed rule between the UE and the eNB, and if the data and the data transmission completion indication information is carried in the RRC connection establishment completion message, then step S406 is executed, wherein the data transmission control information may be transmitted from the UE to the core network device or transmitted from the UE to the access network device.

In the implementation process of step S405 or step S406, the data transmission control information transmitted from the UE to the access network device includes one of the following or a combination thereof: data indication information, used for indicating that the data is transmitted by using the RRC signalling currently; data transmission completion indication information, used for indicating whether data transmission has been completed; and packet control information, wherein the control information is used for indicating the transmission situation of the packets to the access network device; if the result is equal to the pre-set value ("0"), then it is represented that the data transmission has been completed; otherwise, the data transmission is not completed; and a BSR, if the BSR indicates that there is no subsequent data to be transmitted, then it is represented that the data transmission has been completed; otherwise, the data transmission is not completed.

The method for transmitting the data transmission completion indication information may be one of the following: adding a new IE to the RRC signalling used for data transmission, and adding the data indication information to the new IE; using a new MAC CE to bear the data indication information; and using the reserved bits in the MAC sub-frame header to bear the data indication information.

The method for transmitting the data indication information may be one of the following: adding a new IE to the RRC signalling used for data transmission, and adding the data indication information to the new IE; using a new MAC CE to bear the data indication information; and using the reserved bits in the MAC sub-frame header to bear the data indication information.

The user equipment data transmission control information transmitted from the UE to the core network device includes one of the following or a combination thereof: data indication information, used for indicating that the data is transmitted via the RRC signalling currently; data transmission completion indication information, used for indicating whether data transmission has been completed; and packet control information, wherein the control information is used for indicating the transmission situation of packets to the access network device; and the method for the UE to transmit the user equipment data transmission control information to the core network device may be realized by adding the information in the NAS PDU of the RRC signalling.

Step S407: after receiving the data transmission control information, the eNB performs processing operation, and judges whether the data transmission has been completed.

The corresponding processing operation includes the following processes: the eNB judges whether the data receiving has been completed; and allocates resources for the data of which the transmission is not completed.

One of the following methods may be used for the eNB to judge whether the data receiving has been completed: performing judgement through the BSR, if the BSR indicates that there is no subsequent data to be transmitted, then it is represented that the data transmission has been completed; otherwise, the data transmission is not completed; performing judgement through the packet control information, if the number of the packets of which the transmission is not completed is equal to "0", then it is represented that the data transmission has been completed; otherwise, the data transmission is not completed; or performing judgement through the data transmission completion indication information.

Step S408: the eNB uses the S1 message to transmit the data, the data indication information and the data transmission completion indication information to the MME.

The S1 message may be one of the following: an initial user equipment message, an uplink non-access stratum transport message, and a new S1 message (wherein the new S1 message represents a message which is different from the previous S1 message).

During implementation, the following methods may be used to respectively transmit the messages carried in step S408:
(1) the following method may be used to transmit the data indication information to the core network device: adding the data indication information to the S1 message of the transmitted data.
(2) the following method may be used to transmit the data transmission completion indication information to the core network device: the data transmission completion indication information has been added to the S1 message of the transmitted data. The data transmission completion indication information may be received from the UE, or may be generated by the access network device according to the result of judging whether the data receiving is completed.

Step S409: the MME performs processing.

The processing performed by the MME includes: starting a timer, caching the received data, judging whether data receiving is completed according to the data transmission completion indication information, and judging whether to transmit the received data to the subsequent core network nodes.

The core network device judging whether to transmit the received data to the subsequent core network nodes may be judged by using one of the following or a combination thereof: whether the subscription information of the UE is allowed to perform data transmission by using the data transmission optimization scheme; and whether the core network device completes the data receiving.

Step S410: the UE uses the RRC signalling to transmit the data and the data transmission control information. The RRC signalling may be one of the following: an RRC connection establishment completion message, an uplink information transmission message, and a new RRC message. The data transmission control information may be transmitted from the UE to the core network device or transmitted from the UE to the access network device.

In the implementation process, the functions of various pieces of related information are similar to that of the information in step S405 or step S406.

Step S411: after receiving the data transmission control information, the eNB performs processing operation, and judges whether the data transmission has been completed.

One of the following methods may be used for the eNB to judge whether the data receiving has been completed: performing judgement through the BSR, if the BSR indicates that there is no subsequent data to be transmitted, then it is represented that the data transmission has been completed; otherwise, the data transmission is not completed; performing judgement through the packet control information, if the number of the packets of which the transmission is not completed is equal to "0", then it is represented that the data transmission has been completed; otherwise, the data transmission is not completed; and performing judgement through the data transmission completion indication information.

Step S412: the eNB uses the S1 message to transmit the data, the data indication information and the data transmission completion indication information to the MME.

Step S413: the MME performs processing.

The processing performed by the MME includes: caching the received data, judging whether data receiving is completed according to the data transmission completion indication information, and judging whether to transmit the received data to the subsequent core network nodes.

The core network device judging whether to transmit the received data to the subsequent core network nodes may be judged by using one of the following or a combination thereof: whether the subscription information of the UE is allowed to perform data transmission by using the data transmission optimization scheme; and whether the core network device completes the data receiving.

Step S414: the MME transmits the received data to the subsequent core network nodes and stops the data control timer.

Step S415: the MME judges whether to continue to complete the subsequent RRC connection process or release the RRC connection.

The MME judging whether to continue to complete the subsequent RRC connection process or release the RRC connection may be judged according to one of the following: the MME performing judgement according to the UE subscription information; whether there is downlink data required to be transmitted during a period of time after the MME transmits the data to the subsequent nodes; and an agreed rule between the UE and the MME. In this embodiment, the MME continues to complete the subsequent RRC connection process.

Step S416: the MME transmits an initial context establishment request message to the eNB.

The MME notifies the eNB of connection information of a corresponding UE, includes access stratum security context information, switching limit information, QoS (Quality of Service) information, a tunnel terminal identification of a service gateway used for a user plane, address information, etc.

Step S417: the eNB transmits a security mode command message to the UE. The eNB transmits the security mode command to the UE or the MTC device for activating the security of the UE.

In the execution process, the step S417 may also be executed before the step S416, and this process is also an execution manner.

Step S418: the UE transmits a security mode completion message to the eNB. The UE transmits the security mode completion message to the eNB for notifying the eNB of the activation of the security.

Step S419: the eNB transmits an RRC connection reconfiguration message to the UE. The eNB transmits the RRC connection reconfiguration message to the UE for establishing a data radio bearer (DRB) and a signalling radio bearer 2 (SRB 2) for the UE.

Step S420: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S421: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

### Preferred embodiment III

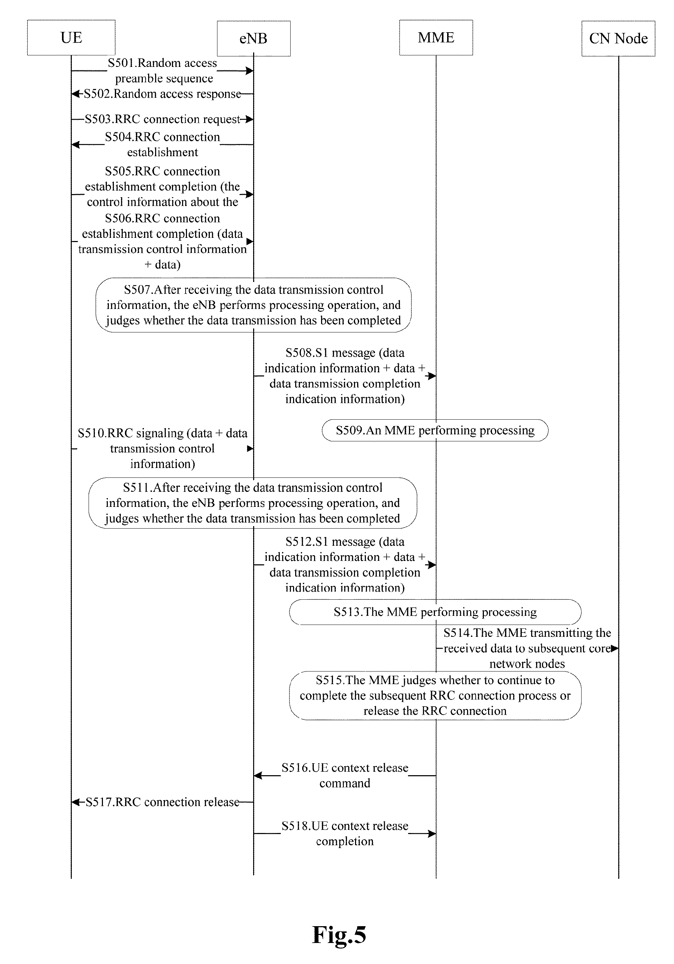

Fig. 5 is a flowchart for releasing the RRC connection process after the UE transmits the data according to this preferred embodiment. The process includes steps S501-S518.

Step S501: a UE transmits a random access preamble sequence to an eNB. When there is data required to be transmitted, the UE or an MTC device first selects a preamble, and transmits the preamble sequence to the eNB according to random access resource information configured by the system.

Step S502: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S503: the UE transmits an RRC connection request to the eNB. After receiving the Msg2, the UE transmits the RRC connection establishment request message by using the uplink resource allocated in the random access response message.

Step S504: the eNB transmits the RRC connection establishment message to the UE. The eNB transmits the RRC connection establishment message to the UE for establishing SRB 1, and allocates the uplink resource used for the RRC connection establishment completion message for the UE.

Step S505: the UE transmits the RRC connection establishment message to the eNB, wherein the message also carries the data transmission control information.

According the SRB 1 established in the RRC connection establishment message and the allocated uplink resource, the UE decides whether to use the control plane signalling to transmit the data according to the size of the to-be-transmitted data volume or the number of the packets. If the control plane signalling is used to transmit the data, then whether to carry the data transmission control information and the data in the RRC connection establishment completion message transmitted to the eNB is determined according to the size of the allocated uplink resource or the agreed rule between the UE and the eNB; if the data is not carried in the RRC connection establishment completion message, then step S505 is executed, and step S506 is skipped to execute step S507, wherein the data transmission control information may be transmitted from the UE to the core network device or transmitted from the UE to the access network device.

Step S506: the UE transmits the RRC connection establishment completion message to the eNB, wherein the message also carries the data transmission control information and the data.

According the SRB 1 established in the RRC connection establishment completion message and the allocated uplink resource, the UE decides whether to use the control plane signalling to transmit the data according to the size of the to-be-transmitted data volume or the number of the packets; if the control plane signalling is used to transmit the data, then whether to carry the data transmission control information and the data in the RRC connection establishment completion message transmitted to the eNB is determined according to the size of the allocated uplink resource or the agreed rule between the UE and the eNB, and if the data and the data transmission completion indication information is carried in the RRC connection establishment completion message, then step S506 is executed, wherein the data transmission control information may be transmitted from the UE to the core network device or transmitted from the UE to the access network device.

In the implementation process, the messages in step S505 and step S506 may comprise the following:
The data transmission control information transmitted from the UE to the access network device includes one of the following or a combination thereof: data indication information, used for indicating that the data is transmitted by using the RRC signalling currently; data transmission completion indication information, used for indicating whether data transmission has been completed; and packet control information, wherein the control information is used for indicating the transmission situation of the packets to the access network device; if the result is equal to the pre-set value ("0"), then it is represented that the data transmission has been completed; otherwise, the data transmission is not completed; and a BSR, if the BSR indicates that there is no subsequent data to be transmitted, then it is represented that the data transmission has been completed; otherwise, the data transmission is not completed.

The method for transmitting the data transmission completion indication information may be one of the following: adding a new IE to the RRC signalling used for data transmission, and adding the data indication information to the new IE; using a new MAC CE to bear the data indication information; and using the reserved bits in the MAC sub-frame header to bear the data indication information.

The method for transmitting the data indication information may be one of the following: adding a new IE to the RRC signalling used for data transmission, and adding the data indication information to the new IE; using a new MAC CE to bear the data indication information; and using the reserved bits in the MAC sub-frame header to bear the data indication information.

The user equipment data transmission control information transmitted from the UE to the core network device includes one of the following or a combination thereof: data indication information, used for indicating that the data is transmitted via the RRC signalling currently; data transmission completion indication information, used for indicating whether data transmission has been completed; and packet control information, wherein the control information is used for indicating the transmission situation of packets to the access network device; and the method for the UE to transmit the user equipment data transmission control information to the core network device may be realized by adding the information in the NAS PDU of the RRC signalling.

Step S507: after receiving the data transmission control information, the eNB performs processing operation, and judges whether a corresponding processing operation of the data transmission has been completed.

The corresponding processing operation includes: the eNB judges whether the data receiving has been completed; and allocates resources for the data of which the transmission is not completed.

One of the following methods may be used for the eNB to judge whether the data receiving has been completed: performing judgement through the BSR, if the BSR indicates that there is no subsequent data to be transmitted, then it is represented that the data transmission has been completed; otherwise, the data transmission is not completed; performing judgement through the packet control information, if the number of the packets of which the transmission is not completed is equal to "0", then it is represented that the data transmission has been completed; otherwise, the data transmission is not completed; and performing judgement through the data transmission completion indication information.

Step S508: the eNB uses the S1 message to transmit the data, the data indication information and the data transmission completion indication information to the MME.

The S1 message may be one of the following: an initial user equipment message, an uplink non-access stratum transport message, and a new S1 message.

The following method may be used to transmit the data indication information to the core network device: adding the data indication information to the S1 message of the transmitted data.

The following method may be used to transmit the data transmission completion indication information to the core network device: the data transmission completion indication information has been added to the S1 message of the transmitted data. The data transmission completion indication information may be received from the UE, or may be generated by the access network device according to the result of judging whether the data receiving is completed.

Step S509: the MME performs processing.

The processing performed by the MME includes: starting a timer, caching the received data, judging whether data receiving is completed according to the data transmission completion indication information, and judging whether to transmit the received data to the subsequent core network nodes.

The core network device judging whether to transmit the received data to the subsequent core network nodes may be judged by using one of the following or a combination thereof: whether the subscription information of the UE is allowed to perform data transmission by using the data transmission optimization scheme; and whether the core network device completes the data receiving.

Step S510: the UE uses the RRC signalling to transmit the data and the data transmission control information.

The RRC signalling may be one of the following: an RRC connection establishment completion message, an uplink information transmission message, and a new RRC message.

The data transmission control information may be transmitted from the UE to the core network device or transmitted from the UE to the access network device.

During the implementation of the above-mentioned step, various messages may be similar to that of steps S505 and S506.

Step S511: after receiving the data transmission control information, the eNB performs processing operation, and judges whether the data transmission has been completed. One of the following methods may be used for the eNB to judge whether the data receiving has been completed: performing judgement through the BSR, if the BSR indicates that there is no subsequent data to be transmitted, then it is represented that the data transmission has been completed; otherwise, the data transmission is not completed; performing judgement through the packet control information, if the number of the packets of which the transmission is not completed is equal to "0", then it is represented that the data transmission has been completed; otherwise, the data transmission is not completed; and performing judgement through the data transmission completion indication information.

Step S512: the eNB uses the S1 message to transmit the data, the data indication information and the data transmission completion indication information to the MME.

Step S513: the MME performs processing.

The processing performed by the MME includes: caching the received data, judging whether data receiving is completed according to the data transmission completion indication information, and judging whether to transmit the received data to the subsequent core network nodes.

The core network device judging whether to transmit the received data to the subsequent core network nodes may be judged by using one of the following or a combination thereof: whether the subscription information of the UE is allowed to perform data transmission by using the data transmission optimization scheme; and whether the core network device completes the data receiving.

Step S514: the MME transmits the received data to the subsequent core network nodes and stops the data control timer.

Step S515: the MME judges whether to continue to complete the subsequent RRC connection process or release the RRC connection.

The MME judging whether to continue to complete the subsequent RRC connection process or release the RRC connection may be judged according to one of the following: the MME performing judgement according to the user equipment subscription information; whether there is downlink data required to be transmitted during a period of time after the MME transmits the data to the subsequent nodes; and in this embodiment, the MEE will execute the process of releasing the RRC connection.

Step S516: the MME transmits a UE context release command to the eNB. The MME transmits the UE context release command to the eNB for releasing the connection between the eNB and the MME.

Step S517: the eNB transmits an RRC connection release message to the UE. The eNB transmits the RRC connection release message to the UE for releasing the RRC connection of the UE.

Step S518: the eNB transmits a UE context release completion message to the MME. The eNB transmits the UE context release completion message to the MME for notifying the MME that the connection has been released.

### Preferred embodiment IV

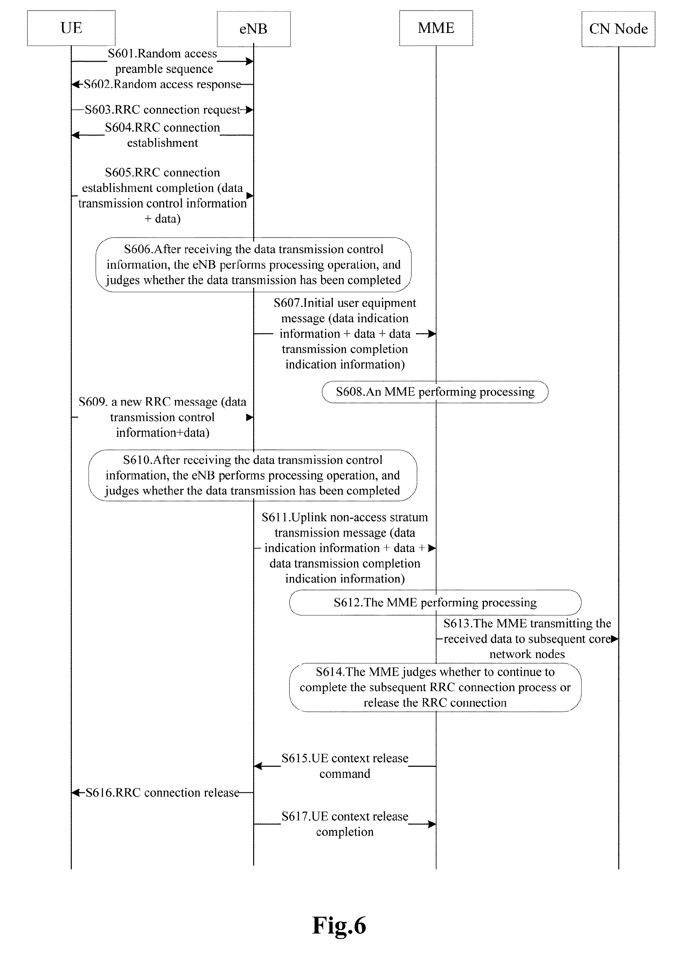

Fig. 6 is a flowchart of this embodiment, a flowchart that the UE uses the RRC connection establishment completion message and the new RRC message together to transmit data, and the access network device uses the initial user equipment message to transmit data and release the RRC connection after the data transmission is completed, and the process includes the following steps S601-S617.

Step S601: a UE transmits a random access preamble sequence to an eNB. When there is data required to be transmitted, the UE or an MTC device first selects a preamble, and transmits the preamble sequence to the eNB according to random access resource information configured by the system.

Step S602: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S603: the UE transmits an RRC connection request to the eNB. After receiving the Msg2, the UE transmits the RRC connection establishment request message by using the uplink resource allocated in the random access response message.

Step S604: the eNB transmits the RRC connection establishment message to the UE. The eNB transmits the RRC connection establishment message to the UE for establishing SRB 1, and allocates the uplink resource used for the RRC connection establishment completion message for the UE.

Step S605: the UE transmits the RRC connection establishment completion message to the eNB, wherein the message also carries the data transmission control information, and in this embodiment, according to the SRB 1 established in the RRC connection establishment completion message and the allocated uplink resource, the number of packets to be transmitted by the UE is one, and the size of the packet is 340 bytes; according to the data volume and the number of the packets, the UE decides to use the control plane signalling to transmit data, and according to the agreed rule of the UE and the eNB, the UE decides to carry the data in the RRC connection establishment completion message transmitted to the eNB; and the UE transmits the data transmission control information to the eNB.

In this embodiment, the data is born in the NAS PDU of the RRC connection establishment completion message; the data transmission control information includes: the data indication information and the BSR; and the transmission method for the data indication information is adding a new IE to the RRC connection establishment completion message, and adding the data indication information to the new IE. The BSR indicates to the UE that there is data of which the transmission is not completed.

Step S606: after receiving the data transmission control information, the eNB performs processing operation, and judges whether the data transmission has been completed. The eNB judges whether the data receiving has been completed, so as to allocate resources for the following data required to be transmitted. In this embodiment, the eNB performs judgement through the BSR, and the BSR received by the eNB indicates that there is subsequent data required to be transmitted.

Step S607: the eNB uses the initial user equipment message to transmit the data, the data indication information and the data transmission completion indication information to the MME.

In this embodiment, the eNB judges that the UE does not complete the data transmission according to step 306, and generates data transmission completion indication information; if the value of the indication information is "0", then it indicates that the UE does not complete the data transmission, and adds the data indication information IE and the data transmission completion indication information IE to the initial UE message for data transmission.

**Table 1**

| IE/Group Name | Presence | Range |
|---|---|---|
| Message type | M (must exist) | |
| ...... | | |
| Data indication information | 0 (optional exist) | |
| Data transmission completion indication information | 0 (optional exist) | |

In this embodiment, as shown in table 1, the value of the data transmission completion indication information being "0" indicates that the data transmission is not completed, and the value of the data indication information being "1" indicates that there is data required to be transmitted.

Step S608: the MME performs processing. The processing performed by the MME includes: starting a timer, caching the received data, judging whether data receiving is completed according to the data transmission completion indication information, and judging whether to transmit the received data to the subsequent core network nodes.

In this embodiment, according to the transmission completion indication information provided in step S607, it is judged that the data receiving is not completed; and the subscription information of the UE indicates that it is allowed to perform data transmission by using the data transmission optimization scheme.

Step S609: the UE uses new RRC signalling to transmit the data and the data transmission control information of which the transmission is not completed. In this embodiment, the data transmission control information is the BSR and the data indication information, and the BSR indicates the UE to complete the data transmission.

Step S610: after receiving the data transmission control information, the eNB performs processing operation, and judges whether the data transmission has been completed. In this embodiment, the eNB performs judgement through the BSR, and the BSR received by the eNB indicates that there is no subsequent data required to be transmitted.

Step S611: the eNB uses the uplink non-access stratum transmission message to transmit the data, the data indication information and the data transmission completion indication information to the MME.

In this embodiment, the eNB judges that the UE completes the data transmission according to step S610, and generates data transmission completion indication information; if the value of the indication information is "1", then it indicates that the UE completes the data transmission, and, according to the form of table 1, adds the data indication information IE and the data transmission completion indication information IE to the uplink non-access stratum transmission message for data transmission.

In this embodiment, the value of the data transmission completion indication information being "1" indicates that the data transmission has been completed, and the value of the data indication information being "1" indicates that there is data required to be transmitted.

Step S612: the MME performs processing. The processing performed by the MME includes: caching the received data, judging whether data receiving is completed according to the data transmission completion indication information, and judging whether to transmit the received data to the subsequent core network nodes.

In this embodiment, according to the transmission completion indication information provided in step S611, it is judged that the data transmission has been completed; and the subscription information of the UE indicates that it is allowed to perform data transmission by using the data transmission optimization scheme.

Step S613: the MME transmits the received data to the subsequent core network nodes and stops the data control timer.

Step S614: the MME judges whether to continue to complete the subsequent RRC connection process or release the RRC connection. In this embodiment, it is decided to execute the process of releasing the RRC connection if there is no downlink data required to be transmitted during a period of time after the MME transmits the data to the subsequent core network nodes.

Step S615: the MME transmits a UE context release command to the eNB. The MME transmits the UE context release command to the eNB for releasing the connection between the eNB and the MME.

Step S616: the eNB transmits an RRC connection release message to the UE. The eNB transmits the RRC connection release message to the UE for releasing the RRC connection of the UE.

Step S617: the eNB transmits a UE context release completion message to the MME. The eNB transmits the UE context release completion message to the MME for notifying the MME that the connection has been released.

### Preferred embodiment V

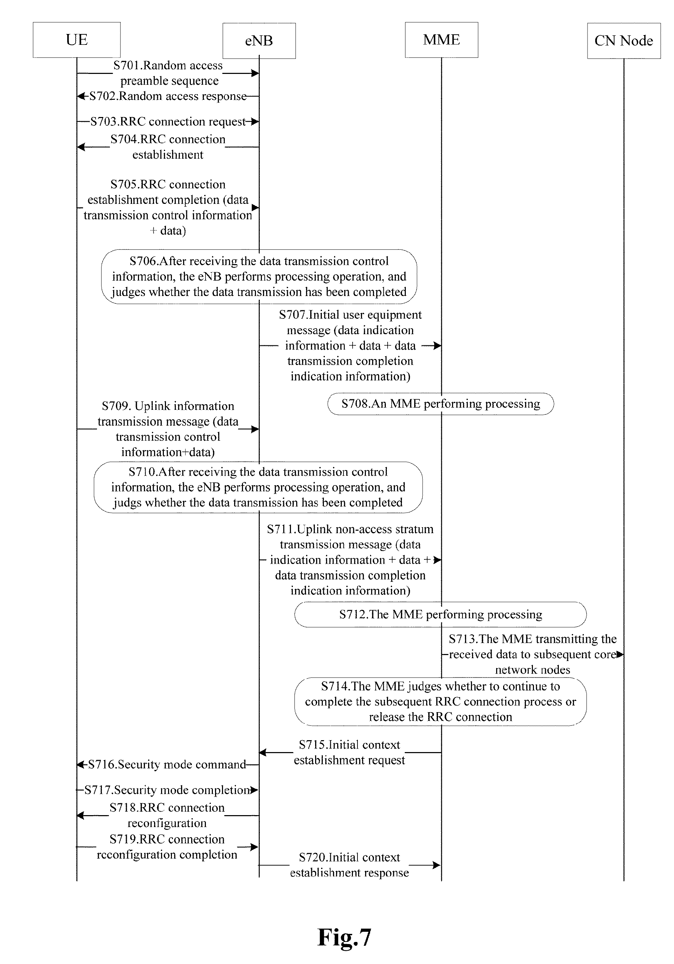

Fig. 7 is a flowchart of this preferred embodiment, a flowchart that a UE uses an RRC connection establishment completion message and an uplink information transmission message together to transmit data, and an access network device uses an uplink non-access stratum transmission message to transmit data and continue to complete a subsequence connection establishment process after the data transmission has been completed, and the flow includes steps S701-S720.

Step S701: a UE transmits a random access preamble sequence to an eNB. When there is data required to be transmitted, the UE or an MTC device first selects a preamble, and transmits the preamble sequence to the eNB according to random access resource information configured by the system.

Step S702: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S703: the UE transmits an RRC connection request to the eNB. After receiving the Msg2, the UE transmits the RRC connection establishment request message by using the uplink resource allocated in the random access response message.

Step S704: the eNB transmits the RRC connection establishment message to the UE. The eNB transmits the RRC connection establishment message to the UE for establishing SRB 1, and allocates the uplink resource used for the RRC connection establishment completion message for the UE.

Step S705: the UE transmits the RRC connection establishment completion message to the eNB, wherein the message also carries the data transmission control information and the data.

In this embodiment, according to the SRB 1 established in the RRC connection establishment completion message and the allocated uplink resource, the number of packets to be transmitted by the UE is five, and the size of the data volume is 700 bytes; according to the data volume and the number of the packets, the UE decides to use the control plane signalling to transmit data, and according to the agreed rule of the UE and the eNB, the UE decides to carry the data in the RRC connection establishment completion message transmitted to the eNB; and the UE transmits the data transmission control information to the eNB.

In this embodiment, the data is born in the NAS PDU of the RRC connection establishment completion message; the data transmission control information includes: the data indication information and the data transmission completion indication information; the method for transmitting the data indication information is using a new MAC CE to bear the data indication information; and the method for transmitting the data transmission completion indication information is using a new MAC CE to bear the data transmission completion indication information.

The method for defining an LCID corresponding to the MAC CE of the data transmission completion indication information is as the following uplink shared channel LCID table, that is, as shown in table 2.

**Table 2**

| Serial number | LCID value |
|---|---|
| 00000 | Common control channel |
| 00001-01010 | Logical channel IDs |
| 01011-10111 | Reserved serial numbers |
| 01011 | Data indication information |
| 01100 | Data transmission completion indication information |
| 11001 | Extension power headroom report |
| 11010 | Power headroom report |
| 11011 | Cell wireless network temporary ID |
| 11100 | Truncated cache status report |
| 11101 | Short cache status report |
| 11110 | Long cache status report |
| 11111 | Filling information |

Two serial numbers are divided from the reserved serial numbers, one serial number (01100) is used to define the data transmission completion indication information, and the other serial number (01011) is used to define the data indication information. After reading the LCID, the receiving end can know that there are data transmission completion indication information and data indication information MAC CE in a corresponding MAC PDU, and then can read the data transmission completion indication information and the data indication information in the MAC CE.

In this embodiment, setting the value of the data indication information as "1" indicates that there is data required to be transmitted, and setting the value of the data transmission completion indication information as "0" indicates that the data transmission is not completed.

Step S706: after receiving the data transmission control information, the eNB performs processing operation, and judges whether the data transmission has been completed. The eNB judges whether the data receiving has been completed, so as to allocate resources for the following data required to be transmitted.

In this embodiment, the eNB judges whether the data receiving has been completed according to the data transmission completion indication information; at the moment, if the value of the received indication information is "0", it represents that the data receiving is not completed.

Step S707: the eNB uses the initial user equipment message to transmit the data, the data indication information and the data transmission completion indication information to the MME.

In this embodiment, the eNB judges that the UE does not complete the data transmission according to step S706, and generates data transmission completion indication information; if the value of the indication information is "0", then it indicates that the UE does not complete the data transmission, and adds the data indication information IE and the data transmission completion indication information IE to the initial user equipment message for data transmission.

**Table 3**

| IE/Group Name | Presence | Range |
|---|---|---|
| Message type | M | |
| ...... | | |
| Data indication information | 0 | |
| Data transmission completion indication | 0 | |

As shown in table 3 above, in this embodiment, the value of the data transmission completion indication information being "0" indicates that the data transmission is not completed, and the value of the data indication information being "1" indicates that there is data required to be transmitted.

Step S708: the MME performs processing.

The processing performed by the MME includes: starting a timer, caching the received data, judging whether data receiving is completed according to the data transmission completion indication information, and judging whether to transmit the received data to the subsequent core network nodes. In this embodiment, according to the transmission completion indication information provided in step 407, it is judged that the data receiving is not completed; and the subscription information of the UE indicates that it is allowed to perform data transmission by using the data transmission optimization scheme.

Step S709: the UE uses the uplink information transmission message to continue to transmit the data and the data transmission control information of which the transmission is not completed.

In this embodiment, the data transmission control information uses the method in step S705, that is, uses the new MAC CE to bear the data transmission completion indication information, and according to the correlation in table 2, that is, diving one serial number (01100) from the reserved serial numbers to define the data transmission completion indication information; after reading the LCID, the receiving end can know that there are data transmission completion indication information MAC CE in a corresponding MAC PDU, and then can read the data transmission completion indication information in the MAC CE. In this embodiment, setting the value of the data transmission completion indication information as "1" indicates that the data transmission has been completed.

Step S710: after receiving the data transmission control information, the eNB performs processing operation, and judges whether the data transmission has been completed.

In this embodiment, the data transmission completion indication information is used to judge whether the data transmission has been completed, and the value of the data transmission completion indication information received in step S709 being "1" represents that the UE has complete the data transmission.

Step S711: the eNB uses the uplink non-access stratum transmission message to transmit the data, the data indication information and the data transmission completion indication information to the MME.

In this embodiment, according to the form of table 3, the data indication information IE and the data transmission completion indication information IE are added to the uplink non-access stratum transmission message for data transmission. The value of the data transmission completion indication information being "1" indicates that the data transmission had been completed, and the value of the data indication information being "1" indicates that there is data required to be transmitted.

Step S712: the MME performs processing.

The processing performed by the MME includes: caching the received data, judging whether data receiving is completed according to the data transmission completion indication information, and judging whether to transmit the received data to the subsequent core network nodes. According to the transmission completion indication information provided in step S711, it is judged that the data transmission has been completed; and the subscription information of the UE indicates that it is allowed to perform data transmission by using the data transmission optimization scheme.

Step S713: the MME transmits the received data to the subsequent core network nodes and stops the data control timer.

Step S714: the MME judges whether to continue to complete the subsequent RRC connection process or release the RRC connection. In this embodiment, it is decided to complete the subsequent RRC connection process if there is downlink data required to be transmitted during a period of time after the MME transmits the data to the subsequent core network nodes.

Step S715: the MME transmits an initial context establishment request message to the eNB. The MME notifies the eNB of connection information of a corresponding UE, includes access stratum security context information, switching limit information, QoS information, a tunnel terminal identification of a service gateway used for a user plane, address information, etc.

Step S716: the eNB transmits a security mode command message to the UE. The eNB transmits the security mode command to the UE or the MTC device for activating the security of the UE.

During implementation, step 416 can also be executed before step 415. The sequence of the two steps is not limited.

Step S717: the UE transmits a security mode completion message to the eNB. The UE transmits the security mode completion message to the eNB for notifying the eNB of the activation of the security.

Step S718: the eNB transmits an RRC connection reconfiguration message to the UE. The eNB transmits an RRC connection reconfiguration message to the UE for establishing data radio bearer and SRB 2 for the UE.

Step S719: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S720: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

### Preferred embodiment VI

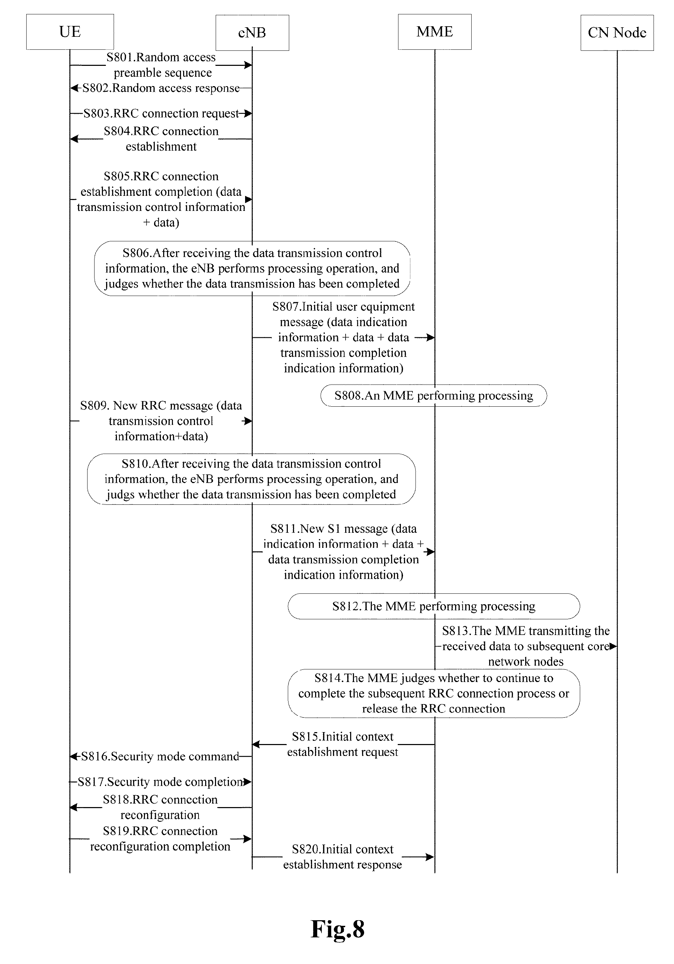

Fig. 8 is a flowchart of this preferred embodiment, a flowchart that a UE only uses a new RRC message to transmit data, and an access network device uses a new S1 message to transmit data and continues to complete a subsequence connection establishment process after the data transmission has been completed, and the flow includes steps S801-S820.

Step S801: a UE transmits a random access preamble sequence to an eNB. When there is data required to be transmitted, the UE or an MTC device first selects a preamble, and transmits the preamble sequence to the eNB according to random access resource information configured by the system.

Step S802: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S803: the UE transmits an RRC connection request to the eNB. After receiving the Msg2, the UE transmits the RRC connection establishment request message by using the uplink resource allocated in the random access response message.

Step S804: the eNB transmits the RRC connection establishment message to the UE. The eNB transmits the RRC connection establishment message to the UE for establishing SRB 1, and allocates the uplink resource used for the RRC connection establishment completion message for the UE.

Step S805: the UE transmits the RRC connection establishment completion message to the eNB, wherein the message only carries the data transmission control information.

In this embodiment, according to the SRB 1 established in the RRC connection establishment completion message and the allocated uplink resource, the number of packets to be transmitted by the UE is one, and the size of the packet is 400 bytes; according to the data volume and the number of the packets, the UE decides to use the control plane signalling to transmit data, and according to the agreed rule of the UE and the eNB, the UE decides only to carry the data transmission control information in the RRC connection establishment completion message transmitted to the eNB; and the UE transmits the data transmission control information to the eNB.

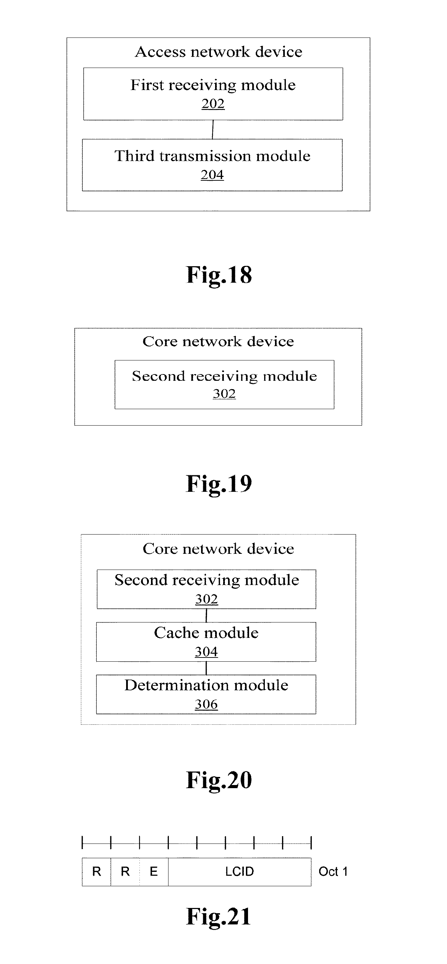

In this embodiment, the data is born in the NAS PDU of the RRC connection establishment completion message; the data transmission control information includes: the data indication information and the BSR; and the transmission method for the data indication information is using the reserved bits in the MAC sub-frame header to bear the data indication information. As shown in figure 21, the "R" in figure 21 represents the reserved bits in the sub-frame header of the MAC, and setting one of the reserved bits as "1" represents the data indication information. After reading the bit, the received end can know that there is data indication information in the corresponding MAC PDU, and then can read the data indication information. In this embodiment, setting the value of the data indication information as "1" indicates that there is data required to be transmitted; and the BSR indicates to the UE that there is data of which the transmission is not completed.

Step S806: after receiving the data transmission control information, the eNB performs processing operation, and judges whether the data transmission has been completed. The eNB judges whether the data receiving is completed, so as to allocate resources for the following data required to be transmitted. In this embodiment, the eNB performs judgement through the BSR, and the BSR received by the eNB indicates that there is subsequent data required to be transmitted.

Step S807: the eNB uses the initial user equipment message to transmit the data indication information and the data transmission completion indication information to the MME.

In this embodiment, the eNB judges that the UE does not complete the data transmission according to step S806, and generates data transmission completion indication information; if the value of the indication information is "0", then it indicates that the UE does not complete the data transmission, and adds the data indication information IE and the data transmission completion indication information IE to the initial user equipment message for data transmission.

**Table 4**

| IE/Group Name | Presence (presence) | Range (range) |
|---|---|---|
| Message type | M | |
| ...... | | |
| Data indication information | 0 | |
| Data transmission completion indication | 0 | |

As shown in table 4 above, in this embodiment, the value of the data transmission completion indication information being "0" indicates that the data transmission is not completed, and the value of the data indication information being "1" indicates that there is data required to be transmitted. The new S1 message different from the S 1 message in the existing protocol in the item Presence in table 4, and as regards the characteristic Presence, the characteristic of two pieces of indication information in the existing protocol is "O", whereas in this embodiment, the characteristic of the two pieces of indication information of the new S1 is "M".

Step S808: the MME performs processing. The processing performed by the MME includes: starting a timer, caching the received data, judging whether data receiving is completed according to the data transmission completion indication information, and judging whether to transmit the received data to the subsequent core network nodes.

In this embodiment, according to the transmission completion indication information provided in step S807, it is judged that the data receiving is not completed; and the subscription information of the UE indicates that it is allowed to perform data transmission by using the data transmission optimization scheme.

Step S809: the UE uses new RRC message to continue to transmit the data and the data transmission control information of which the transmission is not completed. In this embodiment, the data transmission control information is the BSR and the data indication information, and the BSR indicates the UE to complete the data transmission.

In this embodiment, the new RRC message may comprise an RRC processing identification field and an NAS data-specific information field; and may also comprise: a data transmission control information field, a non-critical expansion field, etc., wherein the data transmission control information filed may comprise a data indication information field, a data transmission completion indication information field, a packet control information field, a non-critical expansion field, etc.

Step S810: after receiving the data transmission control information, the eNB performs processing operation, and judges whether the data transmission has been completed. In this embodiment, the eNB performs judgement through the BSR, and the BSR received by the eNB indicates that there is no subsequent data required to be transmitted.

Step S811: the eNB uses the S1 message to transmit the data, the data indication information and the data transmission completion indication information to the MME. In this embodiment, the eNB judges that the UE has completed the data transmission according to step S810, and transmits the new S1 message of the data, wherein the new S1 message may be shown in table 5.

**Table 5**

| IE/Group Name | Presence | Range |
|---|---|---|
| Message Type | M | |
| eNB UE S1AP ID | M | |
| NAS-PDU | M | |
| E-UTRAN CGI | M | |
| TAI | M | |
| Data Indication | M | |
| Data Transmission Finish Indication | M | |
| GW Transport Layer Address | 0 | |
| GUMMEI | 0 | |
| Cell Access Mode | 0 | |
| Relay Node Indicator | 0 | |
| S-TMSI | 0 | |
| CSG Id | 0 | |

In this embodiment, the value of the data transmission completion indication information being "1" indicates that the data transmission has been completed, and the value of the data indication information being "1" indicates that there is data required to be transmitted, and the NAS PDU is used for data transmission.

Step S812: the MME performs processing.

The processing performed by the MME includes: caching the received data, judging whether data receiving is completed according to the data transmission completion indication information, and judging whether to transmit the received data to the subsequent core network nodes. In this embodiment, according to the transmission completion indication information provided in step S811, it is judged that the data transmission has been completed; and the subscription information of the UE indicates that it is allowed to perform data transmission by using the data transmission optimization scheme.

Step S813: the MME transmits the received data to the subsequent core network nodes and stops the data control timer.

Step S814: the MME judges whether to continue to complete the subsequent RRC connection process or release the RRC connection. In this embodiment, it is decided to complete the subsequent RRC connection process if there is downlink data required to be transmitted during a period of time after the MME transmits the data to the subsequent core network nodes.

Step S815: the MME transmits an initial context establishment request message to the eNB. The MME notifies the eNB of connection information of a corresponding UE, includes access stratum security context information, switching limit information, QoS information, a tunnel terminal identification of a service gateway used for a user plane, address information, etc.

Step S816: the eNB transmits a security mode command message to the UE. The eNB transmits the security mode command to the UE or the MTC device for activating the security of the UE.

Step S817: the UE transmits a security mode completion message to the eNB. The UE transmits the security mode completion message to the eNB for notifying the eNB of the activation of the security.

Step S818: the eNB transmits an RRC connection reconfiguration message to the UE. The eNB transmits an RRC connection reconfiguration message to the UE for establishing data radio bearer and SRB 2 for the UE.

It should be noted that step S816 may also be performed before step S815.

Step S819: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S820: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

### Preferred embodiment VII

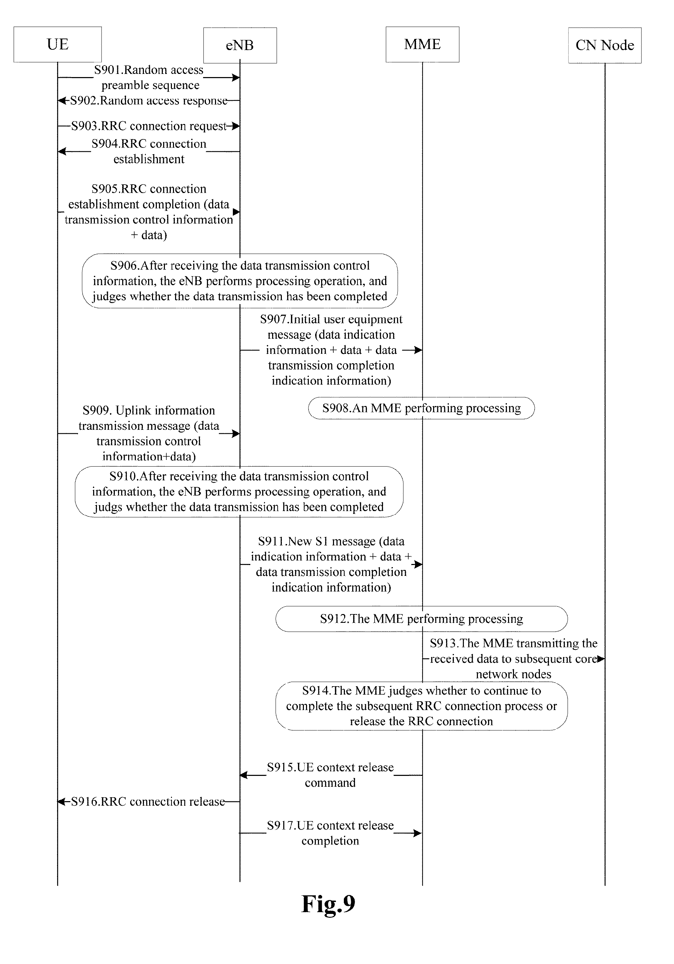

Fig. 9 is a flowchart of this preferred embodiment, a flowchart that a UE only uses an uplink information transmission message to transmit data, and an access network device uses a new S1 message to transmit data releases the RRC connection after the data transmission has been completed, the flow is as follows and includes steps S901-S917.

Step S901: a UE transmits a random access preamble sequence to an eNB. When there is data required to be transmitted, the UE or an MTC device first selects a preamble, and transmits the preamble sequence to the eNB according to random access resource information configured by the system.

Step S902: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S903: the UE transmits an RRC connection request to the eNB. After receiving the Msg2, the UE transmits the RRC connection establishment request message by using the uplink resource allocated in the random access response message.

Step S904: the eNB transmits the RRC connection establishment message to the UE. The eNB transmits the RRC connection establishment message to the UE for establishing SRB 1, and allocates the uplink resource used for the RRC connection establishment completion message for the UE.

Step S905: the UE transmits the RRC connection establishment message to the eNB, wherein the message only carries the data transmission control information.

In this embodiment, according to the SRB 1 established in the RRC connection establishment completion message and the allocated uplink resource, the number of packets to be transmitted by the UE is three, and the size of the packet is 500 bytes; according to the data volume and the number of the packets, the UE decides to use the control plane signalling to transmit data, and according to the agreed rule of the UE and the eNB, the UE decides to carry the data transmission control information in the RRC connection establishment completion message transmitted to the eNB; and the UE transmits the data transmission control information to the eNB.

In this embodiment, the data is born in the NAS PDU of the RRC connection establishment completion message; the data transmission control information includes: the data indication information and the data transmission completion indication information; in this embodiment, the method for transmitting the data indication information is adding a new IE to the RRC connection establishment completion message, and adding the data indication information to the new IE; and in this embodiment, the method for transmitting the data transmission completion indication information is using a new MAC CE to bear the data transmission completion indication information.

The method for defining LCID corresponding to the MAC CE of the data transmission completion indication information is as the following uplink shared channel LCID table, that is, as shown in table 6.

**Table 6**

| Serial number | LCID value |
|---|---|
| 00000 | Common control channel |
| 00001-01010 | Logical channelid |
| 01011-10111 | Reserved serial numbers |
| 01011 | Data transmission completion indication information |
| 11001 | Extension power headroom report |
| 11010 | Power headroom report |
| 11011 | Cell wireless network temporary ID |
| 11100 | Truncated cache status report |
| 11101 | Short cache status report |
| 11110 | Long cache status report |
| 11111 | Filling information |

One serial number (01011) is divided to define the data transmission completion indication information. After reading the LCID, the receiving end can know that there are data transmission completion indication information MAC CE in a corresponding MAC PDU, and then can read the data transmission completion indication information in the MAC CE. In this embodiment, setting the value of the data indication information as "1" indicates that there is data required to be transmitted; and setting the value of the data transmission completion indication information as "0" indicates that the data transmission is not completed.

Step S906: after receiving the data transmission control information, the eNB performs processing operation, and judges whether the data transmission has been completed. The eNB judges whether the data receiving is completed, so as to allocate resources for the following data required to be transmitted.

In this embodiment, the eNB performs judgement according to the data transmission completion indication information, and the value of the data transmission completion indication information received by the eNB being "0" indicates that there is subsequent data required to be transmitted.

Step S907: the eNB uses the initial user equipment message to transmit the data, the data indication information and the data transmission completion indication information to the MME.

In this embodiment, the eNB judges that the UE does not complete the data transmission according to step S906, and adds the data indication information IE and the data transmission completion indication information IE to the initial UE message for data transmission.

**Table 7**

| IE/Group Name | Presence | Range |
|---|---|---|
| Message type | M | |
| ...... | | |
| Data indication information | 0 | |
| Data transmission completion indication | 0 | |

As shown in table 7, in this embodiment, the value of the data transmission completion indication information being "0" indicates that the data transmission is not completed, and the value of the data indication information being "1" indicates that there is data required to be transmitted.

Step S908: the MME performs processing.

The processing performed by the MME includes: starting the data control timer, caching the received data, judging whether data receiving is completed according to the data transmission completion indication information, and judging whether to transmit the received data to the subsequent core network nodes.

In this embodiment, according to the transmission completion indication information provided in step S907, it is judged that the data receiving is not completed; the subscription information of the UE indicates that it is allowed to perform data transmission by using the data transmission optimization scheme; and the cached data is not transmitted to the subsequent core network nodes temporarily.

Step S909: the UE uses the uplink information transmission message to transmit the data and the data transmission completion indication.

In this embodiment, the data transmission control information is the data transmission completion indication information and the data indication information, and the usage rule thereof is the same as that in step S905; in this step, the value of the data transmission completion indication information being "1" indicates that the data transmission has been completed.

Step S910: after receiving the data transmission control information, the eNB performs processing operation, and judges whether the data transmission has been completed.

In this embodiment, the eNB performs judgement according to the data transmission completion indication information, and the value of the data transmission completion indication information received by the eNB being "1" indicates that there is no subsequent data required to be transmitted.

Step S911: the eNB uses the S1 message to transmit the data, the data indication information and the data transmission completion indication information to the MME.

In this embodiment, the new S1 message for data transmission can be shown in table 8.

**Table 8**

| IE/Group Name | Presence | Range |
|---|---|---|
| Message Type | M | |
| eNB UE S1AP ID | M | |
| NAS-PDU | M | |
| E-UTRAN CGI | M | |
| TAI | M | |
| Data Indication | M | |
| Data Transmission Finish Indication | M | |
| GW Transport Layer Address | 0 | |
| GUMMEI | 0 | |
| Cell Access Mode | 0 | |
| Relay Node Indicator | 0 | |
| S-TMSI | 0 | |
| CSG Id | 0 | |

In this embodiment, the value of the data transmission completion indication information being "1" indicates that the data transmission has been completed, and the value of the data indication information being "1" indicates that there is data required to be transmitted, and the NAS PDU is used for data transmission.

Step S912: the MME performs processing. The processing performed by the MME includes: caching the received data, judging whether data receiving is completed according to the data transmission completion indication information, and judging whether to transmit the received data to the subsequent core network nodes.

In this embodiment, according to the transmission completion indication information provided in step S911, it is judged that the data transmission has been completed; and the subscription information of the UE indicates that it is allowed to perform data transmission by using the data transmission optimization scheme.

Step S913: the MME transmits the received data to the subsequent core network nodes and stops the data control timer.

Step S914: the MME judges whether to continue to complete the subsequent RRC connection process or release the RRC connection. In this embodiment, it is decided to execute the process of releasing the RRC connection if there is no downlink data required to be transmitted during a period of time after the MME transmits the data to the subsequent core network nodes.

Step S915: the MME transmits a UE context release command to the eNB. The MME transmits the UE context release command to the eNB for releasing the connection between the eNB and the MME.

Step S916: the eNB transmits an RRC connection release message to the UE. The eNB transmits the RRC connection release message to the UE for releasing the RRC connection of the UE.

Step S917: the eNB transmits a UE context release completion message to the MME. The eNB transmits the UE context release completion message to the MME for notifying the MME that the connection has been released.

### Preferred embodiment VIII

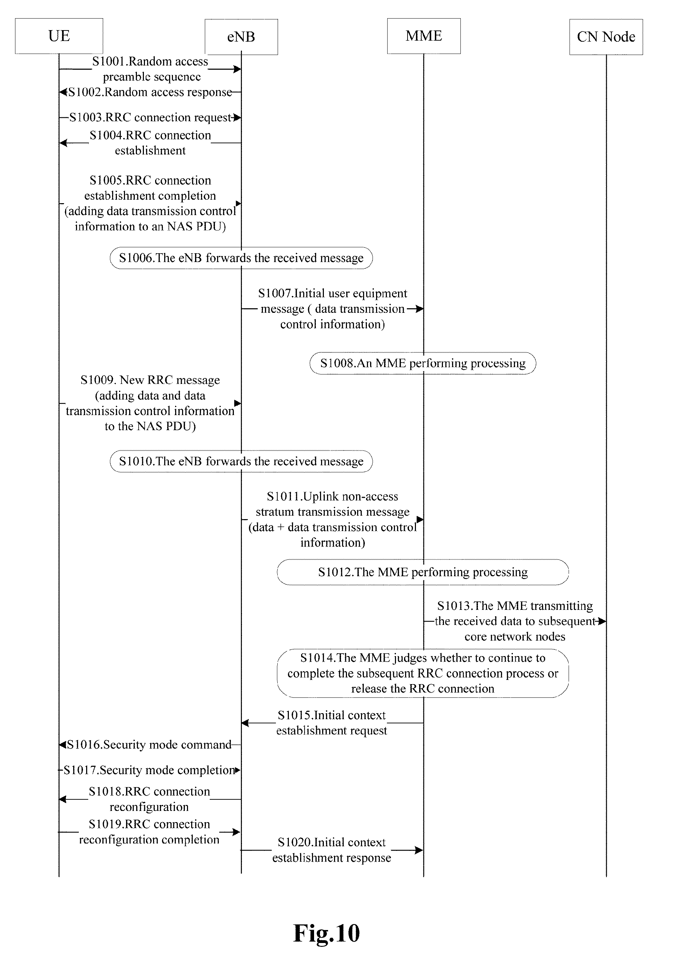

Fig. 10 is a flowchart of this preferred embodiment, a flowchart that a UE only uses a new RRC message to transmit data, and an access network device uses an initial user equipment message to transmit data and continue to complete a subsequence connection establishment process after the data transmission has been completed, and the flow is as follows and includes steps S1001-S1020.

Step S1001: a UE transmits a random access preamble sequence to an eNB. When there is data required to be transmitted, the UE or an MTC device first selects a preamble, and transmits the preamble sequence to the eNB according to random access resource information configured by the system.

Step S102: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S1003: the UE transmits an RRC connection request to the eNB. After receiving the Msg2, the UE transmits the RRC connection establishment request message by using the uplink resource allocated in the random access response message.

Step S1004: the eNB transmits the RRC connection establishment message to the UE. The eNB transmits the RRC connection establishment message to the UE for establishing SRB 1, and allocates the uplink resource used for the RRC connection establishment completion message for the UE.

Step S1005: the UE transmits the RRC connection establishment completion message to the eNB, wherein the message only carries the data transmission control information.

In this embodiment, according to the SRB 1 established in the RRC connection establishment completion message and the allocated uplink resource, the number of packets to be transmitted by the UE is 10; according to the number of the packets, the UE decides to use the control plane signalling to transmit data, and according to the agreed rule of the UE and the eNB, the UE decides only to carry the data transmission control information in the RRC connection establishment completion message transmitted to the eNB; and the data transmission control information is transmitted by the UE to the core network and is added to the NAS PDU of the RRC connection establishment completion message.

In this embodiment, the data is born in the NAS PDU of the RRC connection establishment completion message; the data transmission control information includes the data indication information and the packet control information; in this step, setting the value of the data indication information as "1" indicates that there is data required to be transmitted; and the packet control information is used to represent the data volume of which the transmission is not completed, and the value thereof not being "0" indicates that the data transmission is not completed.

Step S1006: the eNB forwards the received message. The eNB forwards the received message and allocates resources for the following data required to be transmitted.

Step S1007: the eNB uses the initial user equipment message to transmit the data transmission control information to the MME. In this embodiment, the eNB forwards the data transmission control information in the NAS PDU received from the UE to the MME.

Step S1008: the MME performs processing. The processing performed by the MME includes: starting the data control timer, caching the received data, judging whether data receiving is completed according to the data transmission control information, and judging whether to transmit the received data to the subsequent core network nodes. In this embodiment, according to the packet control information provided in step S1005, it is judged that the data receiving is not completed; the subscription information of the UE indicates that it is allowed to perform data transmission by using the data transmission optimization scheme; and the cached data is not transmitted to the subsequent core network nodes temporarily.

Step S1009: the UE uses new RRC message to continue to transmit the data and the data transmission control information of which the transmission is not completed.

In this embodiment, the new RRC message may comprise an RRC processing identification field and an NAS data-specific information field; and may also comprise: a data transmission control information field, a non-critical expansion field, etc., wherein the data transmission control information filed may comprise a data indication information field, a data transmission completion indication information field, a packet control information field, a non-critical expansion field, etc. Both the data transmission control information and the data are added to the NAS PDU of the new RRC message; the data transmission control information is the packet control information and the data indication information; and in this step, the value of the packet control information being "0" represents the data transmission has been completed.

Step S1010: the eNB forwards the received message.

Step S1011: the eNB uses the uplink non-access stratum transmission message to transmit the data and the data transmission control information to the MME; and in this embodiment, the eNB forwards the data transmission control information in the NAS PDU received from the UE to the MME.

Step S1012: the MME performs processing.

The processing performed by the MME includes: caching the received data, judging whether data receiving is completed according to the data transmission control information, and judging whether to transmit the received data to the subsequent core network nodes.

In this embodiment, according to the packet control information provided in step S1011, it is judged that the data transmission has been completed; the subscription information of the UE indicates that it is allowed to perform data transmission by using the data transmission optimization scheme; and the cached data is transmitted to the subsequent core network nodes.

Step S1013: the MME transmits the received data to the subsequent core network nodes and stops the data control timer.

Step S1014: the MME judges whether to continue to complete the subsequent RRC connection process or release the RRC connection.

In this embodiment, it is decided to complete the subsequent RRC connection process if there is downlink data required to be transmitted during a period of time after the MME transmits the data to the subsequent core network nodes.

Step S1015: the MME transmits an initial context establishment request message to the eNB. The MME notifies the eNB of connection information of a corresponding UE, includes access stratum security context information, switching limit information, QoS information, a tunnel terminal identification of a service gateway used for a user plane, address information, etc.

Step S1016: the eNB transmits a security mode command message to the UE. The eNB transmits the security mode command to the UE or the MTC device for activating the security of the UE.

It should be noted that step S1016 may also be performed before step S1015.

Step S1017: the UE transmits a security mode completion message to the eNB. The UE transmits the security mode completion message to the eNB for notifying the eNB of the activation of the security.

Step S1018: the eNB transmits an RRC connection reconfiguration message to the UE. The eNB transmits an RRC connection reconfiguration message to the UE for establishing data radio bearer and SRB 2 for the UE.

Step S1019: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S1020: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

### Preferred embodiment IX

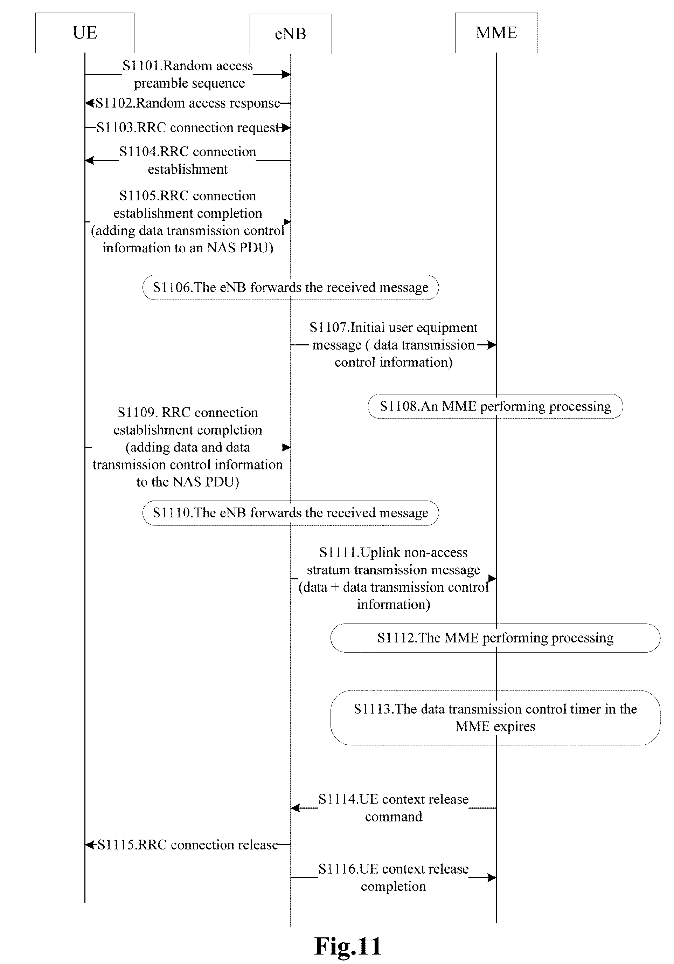

Figure 11 is a flowchart of this preferred embodiment, the UE only uses the RRC connection establishment completion message to transmit data, since when the data control timer in the eNB arrives the time, the eNB initiates the flowchart of the RRC connection release process, and the flow includes steps S1101-S1116.

Step S1101: a UE transmits a random access preamble sequence to an eNB. When there is data required to be transmitted, the UE or an MTC device first selects a preamble, and transmits the preamble sequence to the eNB according to random access resource information configured by the system.

Step S1102: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S1103: the UE transmits an RRC connection request to the eNB. After receiving the Msg2, the UE transmits the RRC connection establishment request message by using the uplink resource allocated in the random access response message.

Step S1104: the eNB transmits the RRC connection establishment message to the UE. The eNB transmits the RRC connection establishment completion message to the UE for establishing SRB 1, and allocates the uplink resource used for the RRC connection establishment completion message for the UE.

Step S1105: the UE transmits the RRC connection establishment completion message to the eNB, wherein the message also carries the data transmission control information and the data. In this embodiment, according to the SRB 1 established in the RRC connection establishment completion message and the allocated uplink resource, the size of data volume to be transmitted by the UE is 400 bytes; according to the data volume, the UE decides to use the control plane signalling to transmit data, and according to the agreed rule of the UE and the eNB, the UE decides to carry the data transmission control information and the data in the RRC connection establishment completion message transmitted to the eNB; and the data transmission control information is transmitted by the UE to the core network and is added to the NAS PDU of the RRC connection establishment completion message.

In this embodiment, the data is born in the NAS PDU of the RRC connection establishment completion message; the data transmission control information includes the data indication information and the data transmission completion indication information; in this step, setting the value of the data indication information as "1" indicates that there is data required to be transmitted; and the value of the data transmission completion indication information being "0" indicates that the data transmission is not completed.

Step S1106: the eNB forwards the received message. The eNB forwards the received message and allocates resources for the following data required to be transmitted.

Step S1107: the eNB uses the initial user equipment message to transmit the data transmission control information to the MME. The eNB forwards the data transmission control information in the NAS PDU received from the UE to the MME.

Step S1108: the MME performs processing.

The processing performed by the MME includes: starting the data control timer, caching the received data, judging whether data receiving is completed according to the data transmission control information, and judging whether to transmit the received data to the subsequent core network nodes.

In this embodiment, according to the data transmission completion indication information provided in step S1105, it is judged that the data receiving is not completed; the subscription information of the UE indicates that it is allowed to perform data transmission by using the data transmission optimization scheme; and the cached data is not transmitted to the subsequent core network nodes temporarily.

Step S1109: the UE uses the RRC connection establishment completion message to continue to transmit the data and the data transmission control information of which the transmission is not completed.

In this embodiment, both the data transmission control information and the data are added to the NAS PDU of the RRC connection establishment completion message; the data transmission control information is the data transmission completion indication information and the data indication information; and in this step, the value of the data transmission completion indication information being "0" represents the data transmission is not completed.

Step S1110: the eNB forwards the received message.

Step S1111: the eNB uses the uplink non-access stratum transmission message to transmit the data and the data transmission control information to the MME; and in this embodiment, the eNB forwards the data transmission control information in the NAS PDU received from the UE to the MME.

Step S1112: the MME performs processing.

The processing performed by the MME includes: caching the received data, judging whether data receiving is completed according to the data transmission control information, and judging whether to transmit the received data to the subsequent core network nodes.

In this embodiment, according to the data transmission completion indication information provided in step S1111, it is judged that the data receiving is not completed; the subscription information of the UE indicates that it is allowed to perform data transmission by using the data transmission optimization scheme; and the cached data is transmitted to the subsequent core network nodes.

Step S1113: the data transmission control timer in the MME expires.

In this embodiment, after the step S1112, the data transmission control timer in the MME expires, and the MME decides to release the RRC connection.

Step S1114: the MME transmits a UE context release command to the eNB. The MME transmits the UE context release command to the eNB for releasing the connection between the eNB and the MME.

Step S1115: the eNB transmits an RRC connection release message to the UE. The eNB transmits the RRC connection release message to the UE for releasing the RRC connection of the UE.

Step S1116: the eNB transmits a UE context release completion message to the MME. The eNB transmits the UE context release completion message to the MME for notifying the MME that the connection has been released.

### Preferred embodiment X

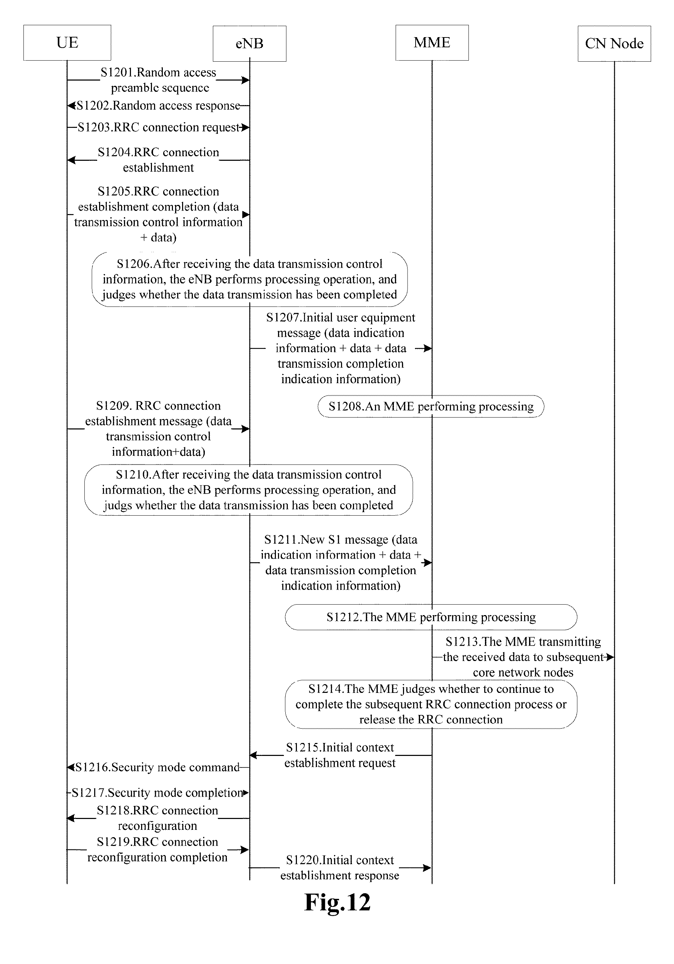

Fig. 12 is a flowchart of this preferred embodiment, a flowchart that a UE only uses an RRC connection establishment completion message to transmit data, and an access network device uses an initial UE message to transmit data and continue to complete a subsequence connection establishment process after the data transmission has been completed, and the flow is as follows and includes steps S1201-S1220.

Step S1201: a UE transmits a random access preamble sequence to an eNB. When there is data required to be transmitted, the UE or an MTC device first selects a preamble, and transmits the preamble sequence to the eNB according to random access resource information configured by the system.

Step S1202: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S1203: the UE transmits an RRC connection request to the eNB. After receiving the Msg2, the UE transmits the RRC connection establishment request message by using the uplink resource allocated in the random access response message.

Step S1204: the eNB transmits the RRC connection establishment message to the UE. The eNB transmits the RRC connection establishment message to the UE for establishing SRB 1, and allocates the uplink resource used for the RRC connection establishment completion message for the UE.

Step S1205: the UE transmits the RRC connection establishment completion message to the eNB, wherein the message also carries the data transmission control information and the data.

In this embodiment, according to the SRB 1 established in the RRC connection establishment completion message and the allocated uplink resource, the number of packets to be transmitted by the UE is four; according to the number of the packets, the UE decides to use the control plane signalling to transmit data, and according to the agreed rule of the UE and the eNB, the UE decides to carry the data transmission control information and the data in the RRC connection establishment completion message transmitted to the eNB; and the UE transmits the data transmission control information to the eNB.

In this embodiment, the data is born in the NAS PDU of the RRC connection establishment completion message; the data transmission control information includes: the data indication information and the data transmission completion indication information; in this embodiment, the method for transmitting the data indication information is using a new MAC CE to bear the data indication information; and the method for transmitting the data transmission completion indication information is using a new MAC CE to bear the data transmission completion indication information.

The method for defining LCID corresponding to the MAC CE of the data transmission completion indication information is as the following uplink shared channel LCID table, that is, as shown in table 9.

**Table 9**

| Serial number | LCID value |
|---|---|
| 00000 | Common control channel |
| 00001-01010 | Logical channel IDs |
| 01011-10111 | Reserved serial numbers |
| 01011 | Data indication information |
| 01100 | Data transmission completion indication information |
| 11001 | Extension power headroom report |
| 11010 | Power headroom report |
| 11011 | Cell wireless network temporary ID |
| 11100 | Truncated cache status report |
| 11101 | Short cache status report |
| 11110 | Long cache status report |
| 11111 | Filling information |

Two serial numbers are divided from the reserved serial numbers, one serial number (01100) is used to define the data transmission completion indication information, and the other serial number (01011) is used to define the data indication information. After reading the LCID, the receiving end can know that there are data transmission completion indication information and data indication information MAC CE in a corresponding MAC PDU, and then can read the data transmission completion indication information and the data indication information in the MAC CE. In this embodiment, setting the value of the data indication information as "1" indicates that there is data required to be transmitted; and setting the value of the data transmission completion indication information as "0" indicates that the data transmission is not completed.

Step S1206: after receiving the data transmission control information, the eNB performs processing operation, and judges whether the data transmission has been completed. The eNB judges whether the data receiving is completed, so as to allocate resources for the following data required to be transmitted.

In this embodiment, the data transmission completion indication information is used to judge whether the data transmission has been completed, and the value of the data transmission completion indication information received in step S1205 being "0" represents that the UE does not complete the data transmission.

Step S1207: the eNB uses the initial UE message to transmit the data indication information and the data transmission completion indication information to the MME.

In this embodiment, the eNB judges that the UE does not complete the data transmission according to step S1206, and adds the data indication information IE and the data transmission completion indication information IE to the initial user equipment message for data transmission.

**Table 10**

| IE/Group Name | Presence | Range |
|---|---|---|
| Message type | M | |
| ...... | | |
| Data indication information | 0 | |
| Data transmission completion indication information | 0 | |

As shown in table 10, in this embodiment, the value of the data transmission completion indication information being "0" indicates that the data transmission is not completed, and the value of the data indication information being "1" indicates that there is data required to be transmitted.

Step S1208: the MME performs processing. The processing performed by the MME includes: starting the data control timer, caching the received data, judging whether data receiving is completed according to the data transmission completion indication information, and judging whether to transmit the received data to the subsequent core network nodes. In this embodiment, according to the transmission completion indication information provided in step S1207, it is judged that the data receiving is not completed; the subscription information of the UE indicates that it is allowed to perform data transmission by using the data transmission optimization scheme; and the cached data is not transmitted to the subsequent core network nodes temporarily.

Step S1209: the UE uses the RRC connection establishment completion message to continue to transmit the data and the data transmission control information of which the transmission is not completed.

In this embodiment, the data transmission control information is the data transmission completion indication information, and the information uses the method in step S1205, that is, uses the new MAC CE to bear the data transmission completion indication information, and according to the correlation in table 7, that is, diving one serial number (01100) from the reserved serial numbers to define the data transmission completion indication information; after reading the LCID, the receiving end can know that there are data transmission completion indication information MAC CE in a corresponding MAC PDU, and then can read the data transmission completion indication information in the MAC CE. In this embodiment, setting the value of the data transmission completion indication information as "1" indicates that the data transmission has been completed.

Step S1210: after receiving the data transmission control information, the eNB performs processing operation, and judges whether the data transmission has been completed.

In this embodiment, the data transmission completion indication information is used to judge whether the data transmission has been completed, and the value of the data transmission completion indication information received in step S1209 being "1" represents that the UE has completed the data transmission.

Step S1211: the eNB uses the S1 message to transmit the data, the data indication information and the data transmission completion indication information to the MME.

In this embodiment, the new S1 message for data transmission is shown in table 11.

**Table 11**

| IE/Group Name | Presence | Range |
|---|---|---|
| Message Type | M | |
| eNB UE S1AP ID | M | |
| NAS-PDU | M | |
| E-UTRAN CGI | M | |
| TAI | M | |
| Data Indication | M | |
| Data Transmission Finish Indication | M | |
| GW Transport Layer Address | 0 | |
| GUMMEI | 0 | |
| Cell Access Mode | 0 | |
| Relay Node Indicator | 0 | |
| S-TMSI | 0 | |
| CSG Id | 0 | |

In this embodiment, the value of the data transmission completion indication information being "1" indicates that the data transmission has been completed, and the value of the data indication information being "1" indicates that there is data required to be transmitted, and the NAS PDU is used for data transmission.

Step S1212: the MME performs processing. The processing performed by the MME includes: caching the received data, judging whether data receiving is completed according to the data transmission completion indication information, and judging whether to transmit the received data to the subsequent core network nodes. In this embodiment, according to the transmission completion indication information provided in step S 1211, it is judged that the data transmission has been completed; and the subscription information of the UE indicates that it is allowed to perform data transmission by using the data transmission optimization scheme.

Step S1213: the MME transmits the received data to the subsequent core network nodes and stops the data control timer.

Step S1214: the MME judges whether to continue to complete the subsequent RRC connection process or release the RRC connection. In this embodiment, it is decided to complete the subsequent RRC connection process if there is downlink data required to be transmitted during a period of time after the MME transmits the data to the subsequent core network nodes.

Step S1215: the MME transmits an initial context establishment request message to the eNB.

The MME notifies the eNB of connection information of a corresponding UE, includes access stratum security context information, switching limit information, QoS information, a tunnel terminal identification of a service gateway used for a user plane, address information, etc.

Step S1216: the eNB transmits a security mode command message to the UE. The eNB transmits the security mode command to the UE or the MTC device for activating the security of the UE.

Step S1217: the UE transmits a security mode completion message to the eNB. The UE transmits the security mode completion message to the eNB for notifying the eNB of the activation of the security.

Step S1218: the eNB transmits an RRC connection reconfiguration message to the UE. The eNB transmits an RRC connection reconfiguration message to the UE for establishing data radio bearer and SRB 2 for the UE. It should be noted that step S1216 may also be performed before step S1215.

Step S1219: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S1220: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

### Preferred embodiment XI

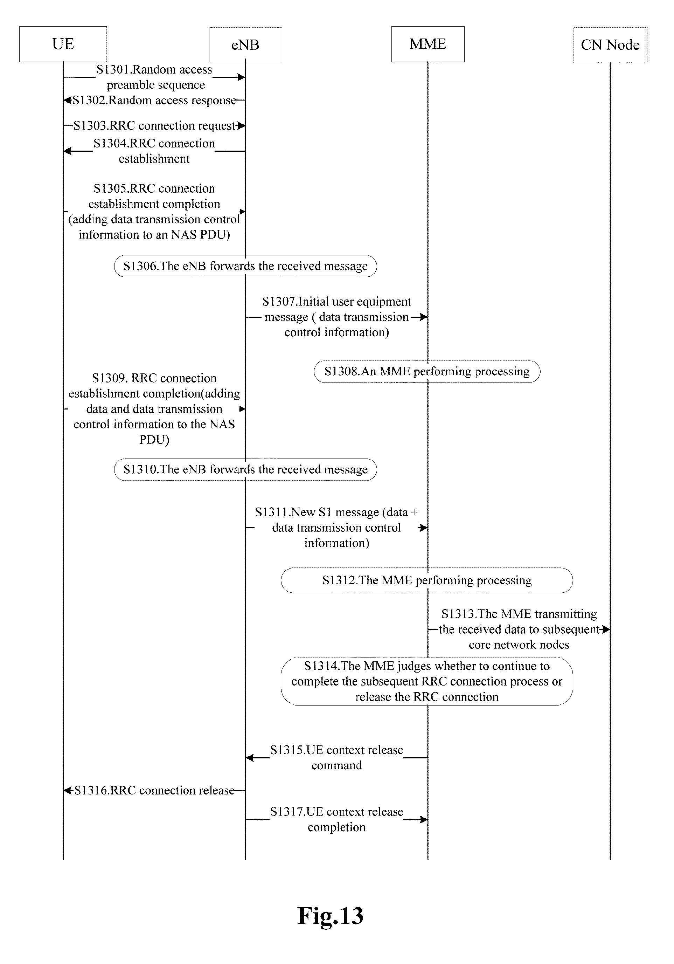

Fig. 13 is a flowchart of this preferred embodiment, a flowchart that a UE only uses an RRC connection establishment completion message to transmit data, and an access network device uses a new S1 message to transmit data releases the RRC connection after the data transmission has been completed, the flow is as follows and includes steps S1301-S1317.

Step S1301: a UE transmits a random access preamble sequence to an eNB. When there is data required to be transmitted, the UE or an MTC device first selects a preamble, and transmits the preamble sequence to the eNB according to random access resource information configured by the system.

Step S1302: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S1303: the UE transmits an RRC connection request to the eNB. After receiving the Msg2, the UE transmits the RRC connection establishment request message by using the uplink resource allocated in the random access response message.

Step S1304: the eNB transmits the RRC connection establishment message to the UE. The eNB transmits the RRC connection establishment message to the UE for establishing SRB 1, and allocates the uplink resource used for the RRC connection establishment completion message for the UE.

Step S1305: the UE transmits the RRC connection establishment completion message to the eNB, wherein the message also carries the data transmission control information and the data.

In this embodiment, according to the SRB 1 established in the RRC connection establishment completion message and the allocated uplink resource, the number of the packets to the transmitted by the UE is one, and the size of packet is 500 bytes; according to the data volume and the number of the packets, the UE decides to use the control plane signalling to transmit data, and according to the agreed rule of the UE and the eNB, the UE decides to carry the data transmission control information and the data in the RRC connection establishment completion message transmitted to the eNB; and the data transmission control information is transmitted by the UE to the core network and is added to the NAS PDU of the RRC connection establishment completion message.

In this embodiment, the data is born in the NAS PDU of the RRC connection establishment completion message; the data transmission control information includes the data indication information and the packet control information; in this step, setting the value of the data indication information as "1" indicates that there is data required to be transmitted; and the packet control information is used to represent the data volume of which the transmission is not completed, and the value thereof not being "0" indicates that the data transmission is not completed.

Step S1306: the eNB forwards the received message. The eNB forwards the received message and allocates resources for the following data required to be transmitted.

Step S1307: the eNB uses the initial user equipment message to transmit the data transmission control information to the MME. The eNB forwards the data transmission control information in the NAS PDU received from the UE to the MME.

Step S1308: the MME performs processing. The processing performed by the MME includes: starting the data control timer, caching the received data, judging whether data receiving is completed according to the data transmission control information, and judging whether to transmit the received data to the subsequent core network nodes. In this embodiment, according to the packet control information provided in step S1305, it is judged that the data receiving is not completed; the subscription information of the UE indicates that it is allowed to perform data transmission by using the data transmission optimization scheme; and the cached data is not transmitted to the subsequent core network nodes temporarily.

Step S1309: the UE uses the RRC connection establishment completion message to continue to transmit the data and the data transmission control information of which the transmission is not completed.

In this embodiment, both the data transmission control information and the data are added to the NAS PDU of the new RRC message; the data transmission control information is the packet control information and the data indication information; and in this step, the value of the packet control information being "0" represents the data transmission has been completed.

Step S1310: the eNB forwards the received message.

Step S 1311: the eNB uses the new S1 message to transmit the data and the data transmission control information to the MME; and in this embodiment, the eNB forwards the data transmission control information in the NAS PDU received from the UE to the MME.

Step S 1312: the MME performs processing.

The processing performed by the MME includes: caching the received data, judging whether data receiving is completed according to the data transmission control information, and judging whether to transmit the received data to the subsequent core network nodes. In this embodiment, according to the packet control information provided in step S 1311, it is judged that the data transmission has been completed; the subscription information of the UE indicates that it is allowed to perform data transmission by using the data transmission optimization scheme; and the cached data is transmitted to the subsequent core network nodes.

Step S1313: the MME transmits the received data to the subsequent core network nodes and stops the data control timer.

Step S1314: the MME judges whether to continue to complete the subsequent RRC connection process or release the RRC connection. In this embodiment, the MME decides to execute the process of releasing the RRC connection after data transmission is completed according the subscription information of the UE.

Step S1315: the MME transmits a UE context release command to the eNB. The MME transmits the UE context release command to the eNB for releasing the connection between the eNB and the MME.

Step S1316: the eNB transmits an RRC connection release message to the UE. The eNB transmits the RRC connection release message to the UE for releasing the RRC connection of the UE.

Step S1317: the eNB transmits a UE context release completion message to the MME. The eNB transmits the UE context release completion message to the MME for notifying the MME that the connection has been released.

### Preferred embodiment XII

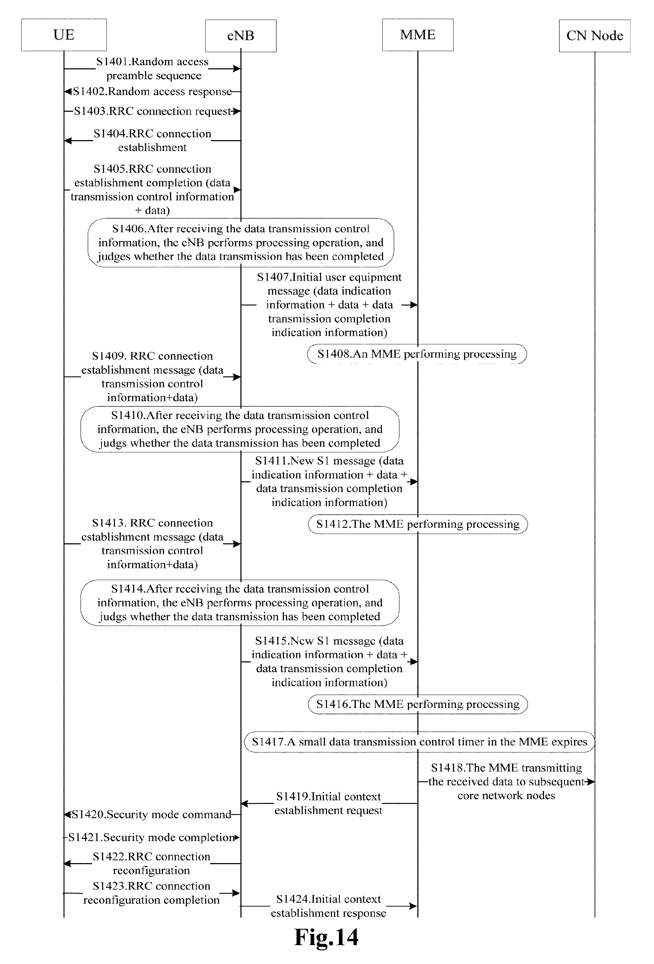

Figure 14 is a flowchart of this preferred embodiment, the UE only uses the RRC connection establishment completion message to transmit data; when the data control timer in the eNB arrives the time, the eNB continues to execute the subsequent flowchart of the RRC connection establishment flow, and the flow includes steps S1401-S1424.

Step S1401: a UE transmits a random access preamble sequence to an eNB. When there is data required to be transmitted, the UE or an MTC device first selects a preamble, and transmits the preamble sequence to the eNB according to random access resource information configured by the system.

Step S1402: the eNB transmits a random access response message (Msg2) to the UE. The random access response message may comprise a preamble sequence identification corresponding to the random access preamble sequence which is transmitted by the UE, uplink transmission timing adjustment, uplink resource allocated for the RRC connection request message, temporary C-RNTI, etc.

Step S1403: the UE transmits an RRC connection request to the eNB. After receiving the Msg2, the UE transmits the RRC connection establishment request message by using the uplink resource allocated in the random access response message.

Step S1404: the eNB transmits the RRC connection establishment message to the UE. The eNB transmits the RRC connection establishment message to the UE for establishing SRB 1, and allocates the uplink resource used for the RRC connection establishment completion message for the UE.

Step S1405: the UE transmits the RRC connection establishment completion message to the eNB, wherein the message also carries the data transmission control information and the data.

In this embodiment, according to the SRB 1 established in the RRC connection establishment completion message and the allocated uplink resource, the data volume to be transmitted by the UE is 610 bytes; according to the data volume, the UE decides to use the control plane signalling to transmit data, and according to the agreed rule of the UE and the eNB, the UE decides to carry the data transmission control information and the data in the RRC connection establishment completion message transmitted to the eNB; and the UE transmits the data transmission control information to the eNB.

In this embodiment, the data is born in the NAS PDU of the RRC connection establishment completion message; the data transmission control information includes: the data indication information and the data transmission completion indication information; the data indication information IE and the data transmission completion indication information IE are added to the RRC connection establishment completion message for data transmission; and the method for transmitting the data transmission completion indication information is using a new MAC CE to bear the data transmission completion indication information.

The method for defining LCID corresponding to the MAC CE of the data transmission completion indication information is as the following uplink shared channel LCID table, that is, as shown in table 12.

**Table 12**

| Serial number | LCID value |
|---|---|
| 00000 | Common control channel |
| 00001-01010 | Logical channelid |
| 01011-10111 | Reserved serial numbers |
| 01011 | Data transmission completion indication information |
| 11001 | Extension power headroom report |
| 11010 | Power headroom report |
| 11011 | Cell wireless network temporary ID |
| 11100 | Truncated cache status report |
| 11101 | Short cache status report |
| 11110 | Long cache status report |
| 11111 | Filling information |

One serial number (01011) is divided to define the data transmission completion indication information. After reading the LCID, the receiving end can know that there are data transmission completion indication information MAC CE in a corresponding MAC PDU, and then can read the data transmission completion indication information in the MAC CE. In this embodiment, setting the value of the data indication information as "1" indicates that there is data required to be transmitted, and setting the value of the data transmission completion indication information as "0" indicates that the data transmission is not completed.

Step S1406: after receiving the data transmission control information, the eNB performs processing operation, and judges whether the data transmission has been completed. The eNB judges whether the data receiving is completed, so as to allocate resources for the following data required to be transmitted.

In this embodiment, the eNB judges whether the data receiving has been completed according to the data transmission completion indication information; at the moment, if the value of the received data transmission completion indication information is "0", it represents that the data receiving is not completed; and the eNB caches the received data and continues to wait for receiving the data of which the transmission is not completed.

Step S1407: the eNB uses the initial UE message to transmit the data indication information and the data transmission completion indication information to the MME.

In this embodiment, the eNB judges that the UE does not complete the data transmission according to step S1406, and adds the data indication information IE and the data transmission completion indication information IE to the initial user equipment message for data transmission.

**Table 13**

| IE/Group Name | Presence | Range |
|---|---|---|
| Message type | M | |
| ...... | | |
| Data indication information | 0 | |
| Data transmission completion | 0 | |

As shown in table 10, in this embodiment, the value of the data transmission completion indication information being "0" indicates that the data transmission is not completed, and the value of the data indication information being "1" indicates that there is data required to be transmitted.

Step S1408: the MME performs processing.

The processing performed by the MME includes: starting the data control timer, caching the received data, judging whether data receiving is completed according to the data transmission completion indication information, and judging whether to transmit the received data to the subsequent core network nodes. In this embodiment, according to the transmission completion indication information provided in step S1407, it is judged that the data receiving is not completed; the subscription information of the UE indicates that it is allowed to perform data transmission by using the data transmission optimization scheme; and the cached data is not transmitted to the subsequent core network nodes temporarily.

Step S1409: the UE uses the RRC connection establishment completion message to continue to transmit the data and the data transmission control information of which the transmission is not completed.

In this embodiment, the data transmission control information is the data transmission completion indication information, and the information uses the method in step S1405, that is, uses the new MAC CE to bear the data transmission completion indication information, and according to the correlation in table 12, that is, diving one serial number (01011) from the reserved serial numbers to define the data transmission completion indication information; after reading the LCID, the receiving end can know that there are data transmission completion indication information MAC CE in a corresponding MAC PDU, and then can read the data transmission completion indication information in the MAC CE. In this embodiment, setting the value of the data transmission completion indication information as "0" indicates that the data transmission is not completed.

Step S1410: after receiving the data transmission control information, the eNB performs processing operation, and judges whether the data transmission has been completed.

In this embodiment, the eNB judges whether the data receiving has been completed according to the data transmission completion indication information; at the moment, if the value of the received data transmission completion indication information is "0", it represents that the data receiving is not completed; and the eNB caches the received data and continues to wait for receiving the data of which the transmission is not completed.

Step S1411: the new S1 message is used to transmit data to the MME. The new S1 message for data transmission is shown in table 14.

**Table 14**

| IE/Group Name | Presence | Range |
|---|---|---|
| Message Type | M | |
| eNB UE S1AP ID | M | |
| NAS-PDU | M | |
| E-UTRAN CGI | M | |
| TAI | M | |
| Data Indication | M | |
| Data Transmission Finish Indication | M | |
| GW Transport Layer Address | 0 | |
| GUMMEI | 0 | |
| Cell Access Mode | 0 | |
| Relay Node Indicator | 0 | |
| S-TMSI | 0 | |
| CSG Id | 0 | |

In this embodiment, the value of the data transmission completion indication information being "1" indicates that the data transmission has been completed, and the value of the data indication information being "1" indicates that there is data required to be transmitted, and the NAS PDU is used for data transmission.

Step S1412: the MME performs processing.

The processing performed by the MME includes: caching the received data, judging whether data receiving is completed according to the data transmission completion indication information, and judging whether to transmit the received data to the subsequent core network nodes. In this embodiment, according to the transmission completion indication information provided in step S 1411, it is judged that the data receiving is not completed; and the subscription information of the UE indicates that it is allowed to perform data transmission by using the data transmission optimization scheme.

Step S1413: the RRC connection establishment completion message is used to continue to transmit the data and the data transmission control information of which the transmission is not completed.

In this embodiment, the data transmission control information is the data transmission completion indication information, and the information uses the method in step S1405, that is, uses the new MAC CE to bear the data transmission completion indication information, and according to the correlation in table 12, that is, diving one serial number (01011) from the reserved serial numbers to define the data transmission completion indication information; after reading the LCID, the receiving end can know that there are data transmission completion indication information MAC CE in a corresponding MAC PDU, and then can read the data transmission completion indication information in the MAC CE. In this embodiment, setting the value of the data transmission completion indication information as "0" indicates that the data transmission is not completed.

Step S 1414: after receiving the data transmission control information, the eNB performs processing operation, and judges whether the data transmission has been completed; in this embodiment, the eNB judges whether the data receiving has been completed according to the data transmission completion indication information; at the moment, if the value of the received data transmission completion indication information is "0", it represents that the data receiving is not completed; and the eNB caches the received data and continues to wait for receiving the data of which the transmission is not completed.

Step S 1415: in this embodiment, according to the form of table 14, the value of the data transmission completion indication information being "0" indicates that the data transmission is not completed, and the value of the data indication information being "1" indicates that there is data required to be transmitted.

Step S1416: the MME performs processing. The processing performed by the MME includes: caching the received data, judging whether data receiving is completed according to the data transmission completion indication information, and judging whether to transmit the received data to the subsequent core network nodes. In this embodiment, according to the transmission completion indication information provided in step S1415, it is judged that the data receiving is not completed; and the subscription information of the UE indicates that it is allowed to perform data transmission by using the data transmission optimization scheme.

Step S 1417: the data transmission control timer in the MME expires.

In this embodiment, after the step S1416, the data transmission control timer in the MME expires; and according to the agreed rule with the UE, and the MME decides to transmit the data and the relevant information to the subsequent core network nodes, and continues to execute the subsequent RRC connection establishment flow.

In this embodiment, it is determined that the UE can uses the data optimization method to transmit data by judging the subscription information; however, the value of the data transmission completion indication information being "0" indicates that the data transmission is not completed, and at the moment, the MME decides not to transmit the data to the subsequent core network nodes.

Step S418: the MME transmits the received data to the subsequent core network nodes.

In the implementation process, preferably, step S1418 may also be performed before step S 1417.

Step S 1419: the MME transmits an initial context establishment request message to the eNB. The MME notifies the eNB of connection information of a corresponding UE, includes access stratum security context information, switching limit information, QoS information, a tunnel terminal identification of a service gateway used for a user plane, address information, etc.

Step S1420: the eNB transmits a security mode command message to the UE. The eNB transmits the security mode command to the UE or the MTC device for activating the security of the UE.

Step S 1421: the UE transmits a security mode completion message to the eNB. The UE transmits the security mode completion message to the eNB for notifying the eNB of the activation of the security.

Step S 1422: the eNB transmits an RRC connection reconfiguration message to the UE. The eNB transmits an RRC connection reconfiguration message to the UE for establishing data radio bearer and SRB 2 for the UE.

Step S1423: the UE transmits an RRC connection reconfiguration completion message to the eNB. The UE transmits the RRC connection reconfiguration completion message to the eNB for notifying the eNB of the completion of the data radio bearer and the SRB 2 configuration.

Step S 1424: the eNB transmits an initial context establishment response message to the MME. The eNB transmits the initial context establishment response message to the MME, wherein the message carries the tunnel terminal identification of the eNB and the address information of the eNB used for the user plane downlink service of the S 1 interface.

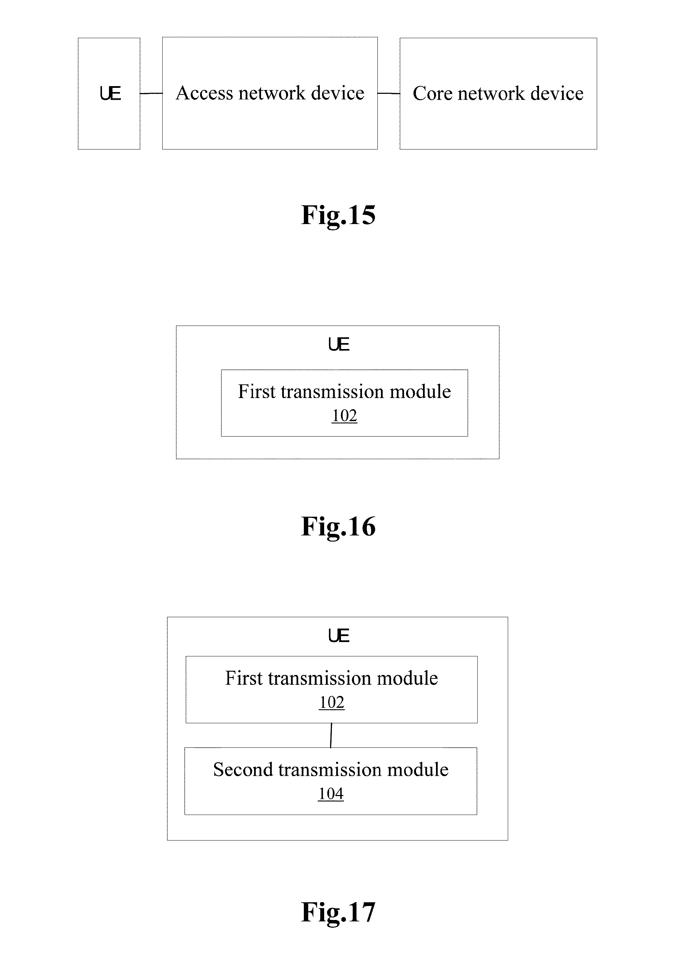

The embodiments of the present invention also provide a data transceiving system, and the structure diagram thereof is shown in figure 15, includes: a UE, an access network device and a core network device.

The structure diagram of the UE is shown in figure 16, includes: a first transceiving module **102**, which is configured to bear the to-be-transmitted data in radio resource control (RRC) signalling in batches and transmit same.

The first transmission module **102** includes: a transmission unit, which is configured to bear the to-be-transmitted data in the non-access stratum (NAS) protocol data unit (PDU) of the RRC signalling in batches and transmit same in the case where the data volume of the to-be-transmitted data exceeds a pre-set data volume or the number of packets of the to-be-transmitted data is multiple.

Preferably, the structure diagram of the UE can also be shown in figure 17, further includes: a second transmission module **104**, which is coupled to the first transmission module **102** and is configured to transmit user equipment data transmission control information to an access network device or a core network device via the RRC signalling, wherein the user equipment data transmission control information is used to indicate a current transmission situation of the to-be-transmitted data.

The structure diagram of the access network device is shown in figure 18, includes: a first receiving module **202**, which is configure to receive the to-be-transmitted data from the user equipment (UE), wherein the to-be-transmitted data is data which is born by the UE in the radio resource control (RRC) signalling in batches and transmitted thereby; and a third transmission module **204**, which is coupled to the first receiving module **202** and is configured to transmit the data received every time.

The first receiving module **202** includes: a receiving unit, which is configured to receive the user equipment data transmission control information transmitted by the UE, wherein the user equipment data transmission control information is used to indicate a current transmission situation of the to-be-transmitted data.

The structure diagram of the core network device is shown in figure 19, includes: a second receiving module **302**, which is configured to receiving the to-be-transmitted data from the UE and/or the access network device, wherein the to-be-transmitted data is data born in the radio resource control (RRC) signalling in batches and transmitted.

Preferably, the core network device may also be shown in figure 20, includes: a cache device **304**, which is coupled to the second receiving module **302** and is configure to cache the received data; and a determination module **306**, which is coupled to the cache module **304** and is configured to determine a current transmission situation of the to-be-transmitted data according to the received user equipment data transmission control information, wherein the user equipment data transmission control information is used to indicate the current transmission situation of the to-be-transmitted data.

From the description above, it can be seen that the present invention achieves the following technique effects:
In this embodiment, the to-be-transmitted data is born in the RRC signalling in batches and transmitted to the core network device. This embodiment solves the problem of low system efficiency and unable to transmit all the data with respect to many services of the UE due to the smaller data volume transmission capability, and can transmit larger data, thus further reducing the signalling overhead generated by data transmission, and improving system efficiency.

Apparently, those skilled in the art shall understand that the above modules or steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

The above description is only example embodiments of the present document and is not intended to limit the present invention, and the present invention can have a variety of changes and modifications for ordinary person skilled in the field. Any modification, equivalent replacement, or improvement made within the spirit and principle of the present invention shall all fall within the protection scope as defined in the appended claims of the present invention.

### Industrial Applicability

The technical solution provided in the present invention can be applied to the data transmission in the wireless communication, and particular, can be applied to the data transmission in the machine type communication or the intelligent terminal communication. In the technical solution provided in the present invention, the UE bears the to-be-transmitted data in the RRC signalling in batches and transmits same, thereby solving the problem of low system efficiency and unable to transmit all the data with respect to many services of the UE due to the smaller data volume transmission capability, and achieving the purpose of reducing signalling overhead due to data transmission and improving system efficiency.

## Claims

1. A method for transmitting data, **characterized by** comprising:
a user equipment (UE) bearing to-be-transmitted data in radio resource control (RRC) signalling in batches and transmitting the to-be-transmitted data.

2. The method according to claim 1, **characterized in that** the UE bearing the to-be-transmitted data in the RRC signalling in batches and transmitting the to-be-transmitted data comprises:
in the case where the data volume of the to-be-transmitted data exceeds a pre-set data volume or the number of packets of the to-be-transmitted data is multiple, the UE bearing the to-be-transmitted data in a non-access stratum (NAS) protocol data unit (PDU) of the RRC signalling in batches and transmitting the to-be-transmitted data.

3. The method according to claim 1, **characterized in that** the method further comprises:
the UE transmitting user equipment data transmission control information to an access network device or a core network device via the RRC signalling, wherein the user equipment data transmission control information is used to indicate a current transmission situation of the to-be-transmitted data.

4. The method according to claim 3, **characterized in that** the user equipment data transmission control information transmitted from the UE to the access network device at least comprises one of the following:
data indication information, which is used to indicate a status where the data is transmitted via the RRC signalling currently;
data transmission completion indication information, which is used to indicate that data transmission has been completed;
packet control information, which is used to indicate the transmission situation of packets of the to-be-transmitted data; and
a buffer status report (BSR), which is used to indicate the transmission situation of subsequent data.

5. The method according to claim 4, **characterized in that** the method for the UE to add the data indication information comprises:
adding a new information element (IE) in the RRC signalling, and adding the data indication information to the new IE;
using a control element (CE) of a new media access control (MAC) to bear the data indication information; or,
using reserved bits in the header of an MAC sub-frame to bear the data indication information.

6. The method according to claim 4, **characterized in that** the method for the UE to add the data transmission completion indication information comprises:
adding a new information element (IE) in the RRC signalling, and adding the data transmission completion indication information to the new IE;
using a control element (CE) of a new media access control (MAC) to bear the data transmission completion indication information; or,
using reserved bits in the header of an MAC sub-frame to bear the data transmission completion indication information.

7. The method according to claim 3, **characterized in that** the user equipment data transmission control information transmitted from the UE to the core network device at least comprises one of the following:
data indication information, which is used to indicate a status where the data is transmitted via the RRC signalling currently;
data transmission completion indication information, which is used to indicate that data transmission has been completed;
packet control information, which is used to indicate the transmission situation of packets of the to-be-transmitted data.

8. The method according to claim 3, **characterized in that** the UE transmitting the data transmission control information to the core network device comprises: the UE adding the data transmission control information to the NAS PDU of the RRC signalling and transmitting the data transmission control information to the core network device.

9. The method according to claim 4 or 7, **characterized in that** the packet control information comprises at least one of the following: the data volume of which the transmission is not completed, the number of packets of which the transmission is not completed, the number of to-be-transmitted packets, and the times of completing the transmission of a single packet of the to-be-transmitted data.

10. The method according to claim 1, **characterized in that** the RRC signalling comprises at least one of the following: an RRC connection establishment completion message; an uplink information transmission message; and a newly defined RRC message.

11. The method according to claim 1, **characterized in that**, after the UE bears the to-be-transmitted data in the RRC signalling in batches and transmits same to the core network device, the method further comprises:
the UE establishing a complete RRC connection or releasing the RRC connection according to the message fed back from the core network device or the access network device.

12. A method for transmitting data, **characterized by** comprising:
receiving to-be-transmitted data from a UE, wherein the to-be-transmitted data is born in radio resource control (RRC) signalling in batches and transmitted by the UE; and
transmitting the data received every time.

13. The method according to claim 12, **characterized in that** receiving the to-be-transmitted data from the UE comprises:
receiving the user equipment data transmission control information transmitted by the UE, wherein the user equipment data transmission control information is used to indicate a current transmission situation of the to-be-transmitted data.

14. The method according to claim 13, **characterized in that** the user equipment data transmission control information comprises at least one of the following:
data indication information, which is used to indicate a status where the data is transmitted via the RRC signalling currently;
data transmission completion indication information, which is used to indicate that data transmission has been completed;
packet control information, which is used to indicate the transmission situation of packets of the to-be-transmitted data;
and a buffer status report (BSR), which is used to indicate the transmission situation of subsequent data.

15. The method according to claim 14, **characterized in that** transmitting the received data indication information transmitted by the UE comprises:
the access network device transmitting the received data indication information which is transmitted by the UE to a core network device, wherein the data indication information is carried in an S1 message, and the S1 message comprises one of the following: an initial user equipment message, an uplink non-access stratum transmission message, and a newly defined S 1 message.

16. The method according to claim 15, **characterized in that**, after transmitting the data received every time, the method further comprises:
the access network device judging whether all the to-be-transmitted data which is transmitted by the UE has been received;
if all the to-be-transmitted data has been received , the access network device transmitting the data transmission completion indication information to the core network device, wherein the data transmission completion indication information is carried in the S 1 message.

17. The method according to claim 16, **characterized in that** the access network device judging whether all the to-be-transmitted data which is transmitted by the UE has been received comprises:
the access network device judging whether there is subsequent data to be transmitted according to the indication of the BSR;
the access network device judging whether the transmission of the packets has been completed according to the packet control information; or
the access network device judging whether the transmission of the data has been completed according to the data transmission completion indication information.

18. A method for receiving data, **characterized by** comprising:
receiving to-be-transmitted data from a user equipment (UE) and/or an access network device, wherein the to-be-transmitted data is born in radio resource control (RRC) signalling in batches and transmitted.

19. The method according to claim 18, **characterized in that**, after receiving the to-be-transmitted data from the user equipment and/or the access network device, the method further comprises:
caching the received data;
determining a current transmission situation of the to-be-transmitted data according to the received user equipment data transmission control information, wherein the user equipment data transmission control information is used to indicate the current transmission situation of the to-be-transmitted data.

20. The method according to claim 19, **characterized in that** the user equipment data transmission control information comprises at least one of the following:
data indication information, which is used to indicate a status where the data is transmitted via the RRC signalling currently;
data transmission completion indication information, which is used to indicate that data transmission has been completed;
packet control information, which is used to indicate the transmission situation of packets of the to-be-transmitted data; and
a buffer status report (BSR), which is used to indicate the transmission situation of subsequent data.

21. The method according to claim 20, **characterized in that** determining a current transmission situation of the to-be-transmitted data according to the received user equipment data transmission control information comprises:
the core network device judging whether all the to-be-transmitted data has been received and whether to transmit the received data to subsequent core network nodes according to the data transmission completion indication information; and
the core network device starting a data transmission control timer according to the data indication information transmitted by the access network device or the data indication information added by the UE in the non-access stratum (NAS) protocol data unit (PDU), wherein the data transmission control timer is used to control the transmission of the data.

22. The method according to claim 21, **characterized in that** the core network device judging whether to transmit the received data to the subsequent core network nodes comprises:
the core network device judging whether the UE allows to bear the to-be-transmitted data in the RRC signalling in batches and transmit the to-be-transmitted data according the subscription information of the UE; or
the core network device judging whether the receiving of the data has been completed.

23. The method according to claim 19, **characterized in that**, after the core network device determining a current transmission situation of the to-be-transmitted data according to the received user equipment data transmission control information, the method further comprises:
the core network device judging whether to continue to complete the subsequent RRC connection process or release the RRC connection.

24. The method according to claim 23, **characterized in that** the core network device judging whether to continue to complete the subsequent RRC connection process or release the RRC connection comprises:
the core network device performing judgement according to the subscription information of the UE;
the core network device performing judgement according to whether there is downlink data required to be transmitted during a period of time after transmitting the data to the subsequent core network nodes; and
the core network device performing judgement according to an agreed rule with the UE.

25. The method according to claim 23, **characterized in that**, after the core network device judging whether to continue to complete the subsequent RRC connection process or release the RRC connection, the method further comprises:
when the core network device determining not to transmit the data to the subsequent core network nodes, the core network device discarding the received data and indicating the access network device to release the RRC connection, or the core network device discarding the received data and performing a subsequent RRC connection process.

26. The method according to claim 21, **characterized in that** the method further comprises:
in the case where the data transmission control timer expires, the core network device transmitting data to the subsequent core network nodes, and completing the subsequent process of connection establishment; and
the core network device indicating the access network device to release the RRC connection and indicating the reason for releasing the RRC connection thereto.

27. A user equipment (UE), **characterized by** comprising:
a first transmission module, configured to bear to-be-transmitted data in radio resource control (RRC) signalling in batches and transmit the to-be-transmitted data.

28. The UE according to claim 27, **characterized in that** the first transmission module comprises:
a transmission unit, configured to bear the to-be-transmitted data in the non-access stratum (NAS) protocol data unit (PDU) of the RRC signalling in batches and transmit the to-be-transmitted data in the case where the data volume of the to-be-transmitted data exceeds a pre-set data volume or the number of packets of the to-be-transmitted data is multiple.

29. The UE according to claim 27, **characterized in that** the UE further comprising:
a second transmission module, configured to transmit user equipment data transmission control information to an access network device or a core network device via the RRC signalling, wherein the user equipment data transmission control information is used to indicate a current transmission situation of the to-be-transmitted data.

30. An access network device, **characterized by** comprising:
a first receiving module, configured to receive to-be-transmitted data from a UE, wherein the to-be-transmitted data is born in radio resource control (RRC) signalling in batches and transmitted by the UE; and
a third transmission module, configured to transmit the data received every time.

31. The access network device according to claim 30, **characterized in that** the first receiving module comprises:
a receiving unit, configured to receive the user equipment data transmission control information transmitted by the UE, wherein the user equipment data transmission control information is used to indicate a current transmission situation of the to-be-transmitted data.

32. A core network device, **characterized by** comprising:
a second receiving module , configured to receive to-be-transmitted data from a user equipment (UE) and/or an access network device, wherein the to-be-transmitted data is born in radio resource control (RRC) signalling in batches and transmitted.

33. The core network device according to claim 32, **characterized in that** the core network device further comprises:
a cache module, configured to cache the received data; and
a determination module, configured to determine a current transmission situation of the to-be-transmitted data according to the received user equipment data transmission control information, wherein the user equipment data transmission control information is used to indicate the current transmission situation of the to-be-transmitted data.

34. A data transceiving system, **characterized by** comprising: the UE as claimed in any of claims 27-29, the access network device as claimed in claim 30 or 31, and the core network device as claimed in claim 32 or 33.
